# EUROPEAN PATENT APPLICATION

(11) **EP 0 962 866 A1**
(43) Date of publication of application: **08.12.1999**
(21) Application number: 98961374.0
(22) Date of filing: 16.12.1998
(51) Int. Cl.: G06F 12/00

(54) **FILE STORAGE METHOD, DATA STORAGE APPARATUS, STORAGE MEDIA MANAGEMENT METHOD, FILE MANAGEMENT METHOD, METHOD OF WRITING RECEIVED DATA IN STORAGE MEDIA, AND PROGRAM STORAGE MEDIA**

(30) Priority: 18.12.1997 JP 34894297; 27.02.1998 JP 4694798; 18.05.1998 JP 13486198; 18.05.1998 JP 13486398
(71) Applicant: MATSUSHITA ELECTRIC INDUSTRIAL CO., LTD., Kadoma-shi, Osaka 571-8501 (JP)
(72) Inventor: MATSUMI, Chiyoko, Suita-shi, Osaka 565-0862 (JP); YAMADA, Masazumi, Moriguchi-shi, Osaka 570-0011 (JP); YOSHIDA, Junji, Neyagawa-shi, Osaka 572-0038 (JP); JURI, Tatsuro, 1-5-8-2804, Tomobuchi-cho, Osaka-shi, Osaka 534-0016 (JP); KURANO, Yukio, Higashi-Osaka-shi, Osaka 579-8061 (JP)
(74) Representative: Grünecker, Kinkeldey, Stockmair & Schwanhäusser Anwaltssozietät
(86) International application number: JP9805696
(87) International publication number: WO9931590

(57) **Abstract**

When a file is to be recorded, the file is recorded with dividing the file. File management information relating to the file, and file management information relating to each of the divided files are produced and then recorded.

Recording medium identification information for identifying a recording medium is produced from an ID of a recording apparatus which is used in initialization of the recording medium, and information of date and time when initialization is started. The produced information is recorded as an item constituting recording medium management information, thereby enabling verifying whether currently held recording medium management information corresponds to the recording medium or not.

The recording medium identification information is recorded so that it can be obtained from reproduction of any portion of the recording medium, whereby the time period required for verification is shortened.

## Description

### Technical Field

The present invention relates to a data recording apparatus which records a digital data as a file, a method of recording a file, and a managing method of managing a recording medium.

The present invention relates also to a file handling method in a file system for managing and accessing a file recorded on a recording medium.

The present invention relates also to a method of, in a computer, fetching data from a packet which is received through, for example, a transmission line, and writing the data onto a recording medium in which a recording position can be freely selected, and to a program-recorded medium.

### Background Art

A prior art data recording apparatus such as a VCR adds auxiliary information to a video/audio signal, and is realized by a configuration which will be described below.

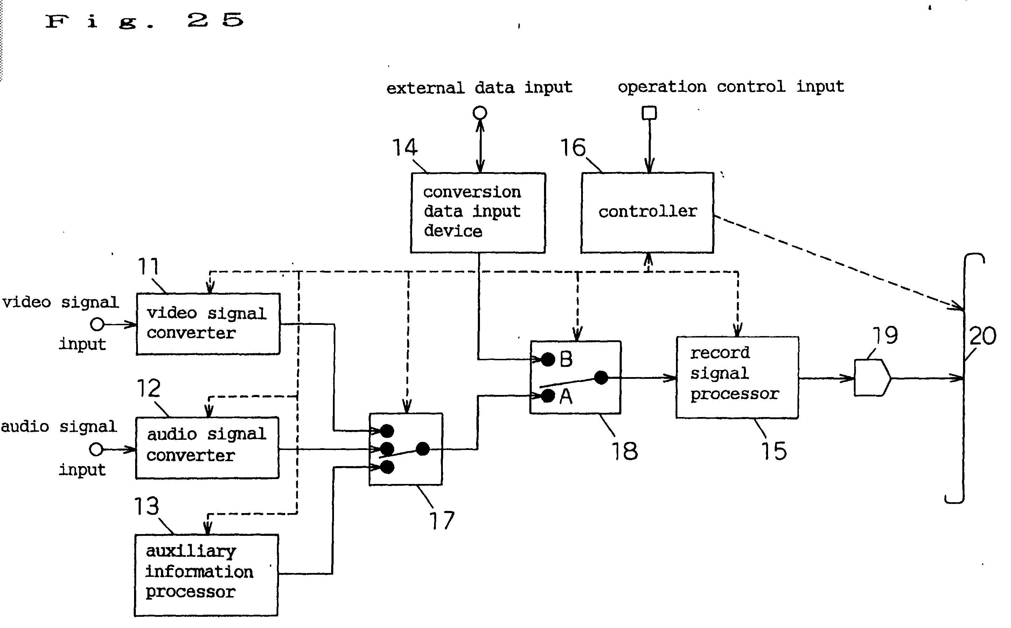

Fig. 25 is a block diagram of a video recording apparatus of the prior art, and 11 denotes a video signal converter, 12 denotes an audio signal converter, 13 denotes an auxiliary information processor, 14 denotes a conversion data input device, 15 denotes a record signal processor, 16 denotes a controller, 17 denotes a first selector, 18 denotes a second selector, 19 denotes a head, and 20 denotes a recording medium.

Hereinafter, a DV (Digital Video Cassette) which is standardized by HD DIGITAL VCR CONFERENCE will be described as an example. In a DV, an input video signal can be recorded with being compressed, and also a compressed video signal can be input and then recorded.

First, the video signal converter 11 performs predetermined conversion on an input video signal, and at the same time the audio signal converter 12 performs predetermined conversion on an input audio signal. In accordance with instructions input to the controller 16, the auxiliary information processor 13 produces predetermined auxiliary information, the second selector 18 is connected to the side A, and the record signal processor 15 formats the input converted video and audio signals, and the produced auxiliary information into record signals, and records the signals onto the recording medium 20.

The auxiliary information includes various kinds of information such as that relating to the type of a signal to be recorded (current system/hi-vision system, frame frequency, audio sampling frequency, sampling bit width, etc.), the processing method, the time code, information relating to the edition/copy state, information indicative of record start and end positions of a program, the contents/configuration/title of a recorded program, and a search key which is used in finding the beginning. Information other than required one can be selectively recorded.

A video signal of the same format as that which has undergone the predetermined conversion performed in the video signal converter 11, an audio signal of the same format as that which has undergone the predetermined conversion performed in the audio signal converter 12, and the auxiliary information are input to the conversion data input device 14. The second selector 18 is connected to the side B, and the record signal processor 15 formats the input converted video and audio signals and the auxiliary information into record signals, and records the signals onto the recording medium 20 via the head 19.

A part of the converted video and audio signals and the produced auxiliary information which are input to the conversion data input device 14 may be combined with a signal which is obtained by the video signal converter 11 by means of edition or the like, that which is obtained by the audio signal converter 12, and that which is produced by the auxiliary information processor 13.

The conversion data input device 14 can transmit and receive not only various signals but also instructions given to the data recording apparatus.

When the video signal is once converted by the video signal converter 11, the video signal is a mere stream of digital data. When usual data are input in a predetermined format from the conversion data input device 14, it is possible to record not only the video signal but also usual data.

In the data recording apparatus described above, the signal to be recorded is assumed to be a video signal which, even when it is corrected, is not affected in image quality, and the error correction ability is insufficient far recording of usual data in which even an error of one byte is not allowed.

Therefore, a verifying operation may be possible in which the recorded contents are verified after recording and data that are not correctly recorded are recorded. When verification/rerecording is performed in the unit of a file in the sane manner as the prior art, however, there arise problems such as that, when a file has a large size, the possibility of rerecording is increased and, even when rerecording is performed, a long time period is required for recording, and that the use amount of a recording medium is excessively large.

In a data recording apparatus such as a VCR described above, in the case where recorded contents of a video tape are to be checked in a short time period, there is no method other than that in which the video tape is subjected to a high-speed search. In other words, even when only a part of a recording medium is reproduced, it is impossible to identify contents recorded in the whole of the recording medium.

When the operator of the apparatus replaces a recording medium with another one at a timing between the previous recording or reproducing operation and the next recording operation, data are recorded in a region where recording is not originally allowed. Therefore, there arise problems in that data are sometimes overwritten on recorded data of the other recording medium and the data which have been erased as a result of the overwriting can never be restored, and that data which are seemed to have been recorded are missing.

In a data recording apparatus such as a VCR described above, a video signal which can be corrected even when an error occurs during reproduction is mainly used. In the case where such an apparatus is used for recording at usual data in which even an error of one byte is not allowed, there is a problem in that, when a tape which is damaged by repeating operations such as recording, reproduction, and searching is used, the error correction ability becomes insufficient.

When recording of usual data is to be realized as described above, if, in addition to the usual data, also stream data of a video signal recorded on a DV are allowed by introduction of a tile system to be handled as a file which is managed by an OS of a computer (for example, a personal computer), it will be very useful. A file system required for the above is proposed in, for example, an application of International Patent Application No. PCT/JP98/03166.

On the other hand, a file system for managing data is incorporated in a personal computer (hereinafter, PC), so that unified data can be accessed as a file. In a data recording apparatus such as a VCR described above, for example, a DV has a recording capacity of about 12 GB for a 60-min. tape (Small cassette). Also high-density recording due to the use of Standard cassette in which the tape can be prolonged 4.5 times, thinning of the tape, and a narrowed Track pitch is standardized. It is possible to record a very large amount of data. If such data can be handled by a PC as a file, it will be useful.

When a file system for managing data of a DV is to be newly constructed, if, considering that a tape medium is sequential, processes unique to an image such as a DV (for example, a work of editing a video data by the user) can be easily performed, the system will be very useful.

The processes unique to an image are listed below:
1) division of a file (recording of a long term is divided into several scenes);
2) trimming of a file (unnecessary front and rear portions only are deleted);
3) coupling of files (for example, the title is inserted);
4) deletion of a file; and
5) copy, movement, and the like, of a file between recording media which are managed in different file systems.

For example, FAT32 system is known as a file system for managing a hard disk drive (HDD). In FAT32 system, the size of a file to be handled must be smaller than 4 GB. By contrast, in a DV, there is a possibility that a file of 12 GB exists even for a 60-min. tape. In the prior art, it is impossible to copy such a file from a DV to an HDD.

On the other hand, as the development of the performance of a PC, a PC begins to handle a data such as a video/audio data which is to be processed in real time. As an Interface (hereinafter, I/F) for transmitting a data which is to be processed in real time, known is IEEE 1394 system. IEEE 1394 system includes a synchronous transmission mode which is called Isochronous transmission and in which data are kept to be always transmitted at substantially periodical intervals. When this mode is used, video/audio data can be transmitted in real time.

A DV is equipped with an IEEE 1394 I/F. When a DV is connected to a PC having an IEEE 1394 I/F, data transmission between the DV and the PC is enabled. Video and audio data which are to be transmitted are transmitted in the form of packets.

As a standard recording medium, a PC has an HDD. When a PC receives a data transmitted from a DV via IEEE 1394 and writes the received data onto an HDD, data imaged by the DV can be captured by the PC.

In summary, Isochronous transmission is a mode in which stream data are kept to be sent without performing Hand-shake, and it is not guaranteed that the beginning of the received data is synchronous with a Frame which is a record unit of a DV. Namely, a packet which is received at the start of reception is not always the leading packet of a Frame. Also when a packet to be transmitted is missing in transmission or when an error occurs in a data of a packet, the packet is not resent. Therefore, there is a possibility that a received data is missing. Furthermore, one packet must be transmitted for each Time-slot of fixed intervals (8000 time slot/second), and packets carrying data and Null packets carrying no data are mixedly transmitted.

In order to capture such a data by a PC, usually, it seems that a received data must be once held by a reception buffer and then written onto an HDD while being shaped into the unit of Frame.

With respect to a data of a DV, however, a Video signal itself has 25 Mbps (in the case of NTSC/PAL system), and an Audio signal, auxiliary data, and various headers are added to be formed into a data stream of 28.8 Mbps. In a process of writing a data onto an HDD by a PC in a method described above, therefore, the probability that missing of a Frame or the like occurs is very high, and hence there is a problem in that it is difficult to stably continue such a process while maintaining reliability of data.

### Disclosure of Invention

In view of these points, it is an object of the invention to provide a file recording method and a data recording apparatus which efficiently record a file.

Furthermore, it is an object of the invention to provide a cassette managing method and a data recording apparatus which identifiably manage recording media.

In view of these points, moreover, it is an object of the invention to provide a file handling method in which, in a file system wherein a data recorded on a recording medium such as a tape is managed as a file, division, coupling, and deletion of a file, and copy and movement of a file between recording media which are managed in different file systems can be efficiently performed.

In view of these points, moreover, it is an object of the invention to provide a method of, in, for example, a computer, efficiently performing predetermined data shaping on a data that is transmitted at a high speed, and recording the data.

The 1st invention of the present invention (corresponding to the invention of claim 1) is a file recording method characterized in that
a file is divided into plural divided files,
said divided files are recorded on a recording medium,
information relating to said file, and information respectively relating to said divided files are produced, and
said information relating to said file, and said information relating to said divided files are recorded on said recording medium.

The 6th invention of the present invention (corresponding to the invention of claim 6) is a data recording apparatus characterized in that said apparatus comprises:
format converting means for, when an amount of data of a file exceeds a predetermined reference, dividing said file into plural divided files, producing information relating to said file and said divided files, and converting data of said divided files and said information into signals of a record format;
recording means for performing a predetermined record signal process on said signals of said record format which are obtained by said format converting means, and then recording said signals;
reproducing means for reproducing said recording medium, and performing a predetermined reproduction signal process and an error detection; and
reverse format converting means for obtaining said data of said divided files and said information from a signal of said record format which is obtained from said recording medium by said reproducing means, judging whether data of said divided files are recorded correctly or not, and informing said format converting means of a result of the judgment.

The 10th invention of the present invention (corresponding to the invention of claim 10) is a recording medium managing method characterized in that, on the basis of recording apparatus identification information which can identify a recording apparatus that is used in initialization of a recording medium, and information of date and time when the initialization is started, recording medium identification information for identifying said recording medium is produced, and
said recording medium identification information is recorded on said recording medium as an item constituting recording medium management information which is information relating to a recording medium.

The 11th invention of the present invention (corresponding to the invention of claim 11) is a recording medium managing method characterized in that recording medium identification information for identifying a recording medium is recorded in plural places of said recording medium.

The 15th invention of the present invention (corresponding to the invention of claim 15) is a recording medium managing method characterized in that, when a recording medium which has been initialized is to be reinitialized, recording medium identification information which is produced before said reinitialization and which is used for identifying said recording medium is taken over.

The 18th invention of the present invention (corresponding to the invention of claim 18) is a data recording apparatus characterized in that said apparatus comprises:
recording medium identification information producing means for, on the basis of recording apparatus identification information which identifies a recording apparatus that is used in initialization of a recording medium, and information of date and time when the initialization is started, producing recording medium identification information contained in recording medium management information which is information relating to said recording medium;
format converting means for converting file data, information relating to said file data, and said recording medium management information into signals of a record format in which said recording medium identification information is incorporated for each minimum record unit;
recording means for performing a predetermined record signal process on the signals of said record format which are obtained by said format converting means, and then recording said signals;
reproducing means for reproducing said recording medium on which said tile data, said information relating to said file data, and said recording medium management information are recorded, and performing a predetermined reproduction signal process and an error detection;
reverse format converting means for reverse-converting said file, said information relating to said file, and said recording medium management information, from said signals of said record format which are obtained from said recording medium by said reproducing means, into an original format;
recording medium identification information extracting means for extracting said recording medium identification information incorporated for each minimum record unit, from the signals of said record format which are obtained from said recording medium by said reproducing means; and
recording medium management information holding means for holding recording medium management information relating to said recording medium, and judging whether said recording medium identification information obtained from said recording medium identification information extracting means coincides with said recording medium identification information contained said held recording medium management information or not.

The 19th invention of the present invention (corresponding to the invention of claim 19) is a recording medium managing method characterized in that medium reliability informatian indicating reliability of a recording medium is recorded on said recording medium as an item constituting recording medium management information which is information relating to said recording medium.

The 23rd invention of the present invention (corresponding to the invention of claim 23) is a data recording apparatus characterized in that said apparatus comprises:
format converting means for converting file data, information relating to said file data, and said recording medium management information relating to a recording medium into signals of a record format in which recording medium identification information for identifying said recording medium is incorporated for each minimum record unit;
recording means for performing a predetermined record signal process on the signals of said record format which are obtained by said format converting means, and then recording said signals;
reproducing means for reproducing said recording medium on which said file data, said information relating to said file data, and said recording medium management information are recorded, and performing a predetermined reproduction signal process and an error detection;
reverse format converting means for reverse-converting said file data, said information relating to said file data, and said recording medium management information, from said signals of said record format which are obtained from said recording medium by said reproducing means, into an original format; and
recording medium management information holding means for holding recording medium management information obtained by said reverse format converting means and relating to said recording medium, and, when said recording medium is accessed, updating medium reliability information which is an item constituting recording medium management information, to a latest state.

According to the invention, in the case of, for example, a large-capacity file, the file is divided so that the large-capacity file is handled on a recording medium as files of an appropriate capacity. Therefore, the time period for verifying immediately after recording whether recording is performed correctly or not can be made minimum, and data which are to be rerecorded as a result of the verification can be restricted to a part of the file instead of the whole of the file. As a result, data recording can be efficiently performed. In the case where an error occurs in one recording block on a tape during in reproduction, for example, the possibility that an error occurs also in another recording block is further lowered. With respect to recorded data also, therefore, the error correction ability is largely improved.

According to the invention, for example, recording media produce inconsistent recording medium identification information, and the information is registered in recording medium management information and recorded on the recording media. When recording medium identification information of a recording medium is once known, therefore, the recording medium can be surely identified, so that a fatal disorder such as that recording can be performed on a wrong recording medium is prevented from occurring. When recording medium identification information is recorded on the whole of a recording medium, for example, the recording medium identification information can be obtained only by reproducing a part of the recording medium. When medium reliability information is managed, the fear that recorded data cannot be reproduced can be further reduced, and the error correction ability can be largely improved.

A twenty-fourth invention (corresponding to the invention set forth in claim 24) is a file handling method wherein a region in which an original file is recorded and which is identifiable by a record start position and a record end position on a recording medium is divided into N subregions from a first subregion to an N-th subregion,
among positions across a boundary between an (i-1)-th subregion (1 < i ≦ N) and an i-th subregion which are obtained by the division, a position on a side of the (i-1)-th subregion is determined as a record end position of the (i-1)-th subregion,
among the positions across the boundary, a position on a side of the i-th subregion is determined as a record start position of the i-th subregion, and
the N-divided subregions are handled as N new files.

A twenty-sixth invention (corresponding to the invention set forth in claim 26) is a file handling method wherein, in a region of an original file which is identifiable by a record start position and a record end position on a recording medium, a position immediately after an end of a record portion of a first data which is recorded with starting from the record start position is determined as a new record start position of the original file,
in the region of the original file, a position immediately before a start of a record portion of a second data which is recorded with ending at the record end position is determined as a new record end position of the original file, and
trimming of the original file is performed on the basis of the determined new record start and end positions.

A twenty-eighth invention (corresponding to the invention set forth in claim 28) is a file handling method wherein, in a case where N files which are identifiable by a record start position and a record end position on a recording medium are continuously recorded in ascending order as first to N-th (N ≥ 2) files,
the N files are handled as one new file which is identified by a record start position of the first file and a record end position of the N-th file.

A thirtieth invention (corresponding to the invention set forth in claim 30) is a file handling method for a file system in which data recorded in continuous regions on a recording medium are managed and accessed as a file, a position immediately after a record end position of the file recorded close to an end is held as a data end position, and, when a new file is to be recorded on the recording medium, recording is performed with starting from the data end position, wherein,
when a latest file recorded on the recording medium and close to the end is to be deleted, the data end position is returned to a record start position of the latest file at the same time when the latest file is deleted, thereby deleting the latest file.

A thirty-third invention (corresponding to the invention set forth in claim 33) is a file handling method in the case where, by using a first recording medium in which a file management is performed by using a first file system of a handlable file size of M bytes, and a second recording medium in which a file management is performed by using a second file system of a handlable file size of L bytes (M > L), a source file of a file size of K bytes (M ≧ K > L) and on the first recording medium is copied to the second recording medium, wherein,
on the first recording medium, the source file is divided into N subfiles each having a file size which is equal to or small than L bytes, and
the N divided subfiles are copied to the second recording medium.

A thirty-sixth invention (corresponding to the invention set forth in claim 36) is a file handling method in the case where, by using a first recording medium in which a file management is performed by using a first file system of a handlable file size of M bytes, and a second recording medium in which a file management is performed by using a second file system of a handlable file size of L bytes (M > L), a source tile of a file size of K bytes (M ≧ K > L) and on the first recording medium is copied to the second recording medium, wherein
N files having a total file size of K bytes are prepared on the second recording medium, and
the source file is divided into N portions and then copied to the N files.

According to the invention, when a file recorded on, for example, a tape is to be divided, actual data copy/movement on the tape never occurs, and hence division, trimming, coupling, and deletion of a file can be performed in a moment. When a file which is last recorded on a tape is deleted, for example, the deleted region is reused for newly recording a file. Therefore, it is possible to reduce increase of an unusable region due to deletion of a file.

According to the invention, when a large-capacity file is to be copied to an HDD, for example, copying is performed while automatically dividing the file, or the file is automatically divided and copying is then performed. As a result, copying between two recording media having different maximum handlable file sizes can be performed.

A thirty-eighth invention (corresponding to the invention set forth in claim 38) is a method of writing a received data onto a recording medium in a computer comprising: a first interface which receives a packet configured by a data portion and an addition information portion, through a transmission path; a recording medium in which a position where a data is to be recorded can be freely selected; a second interface which writes a data onto the recording medium; a memory which temporarily stores a data; a processor which controls operations of the first interface and the second interface; and a bus through which the first interface, the second interface, the memory, and the processor are connected to one another, wherein
the first interface sequentially writes the received packet into the memory through the bus,
in accordance with contents of the data portion of the packet written into the memory, the processor instructs the second interface about a record position of the recording medium where the data portion is to be recorded, and
the second interface reads out the data portion from the packet written into the memory, through the bus, and writes the data portion into the record position of the recording medium which is instructed by the processor.

According to the invention, among data written into a reception buffer, for example, a required data can be directly written into a hard disk without transferring the data to another buffer and reshaping the data. Therefore, the writing process can be rapidly performed while shaping a data.

### Brief Description of Drawings

Fig. 1 is a block diagram of a data recording apparatus of a first embodiment.
Fig. 2 is a view showing the configuration of an example of file information which is produced and recorded in the first embodiment.
Fig. 3 is a block diagram of a data recording apparatus of a second embodiment.
Fig. 4 is a block diagram of a data recording apparatus of a third embodiment.
Fig. 5 is a block diagram of a data recording apparatus of a fourth embodiment.
Figs. 6(a) and 6(b) are views showing the configuration of recording medium identification information which is managed/produced and recorded in the fourth embodiment.
Fig. 7 is a block diagram of a data recording apparatus of a fifth embodiment.

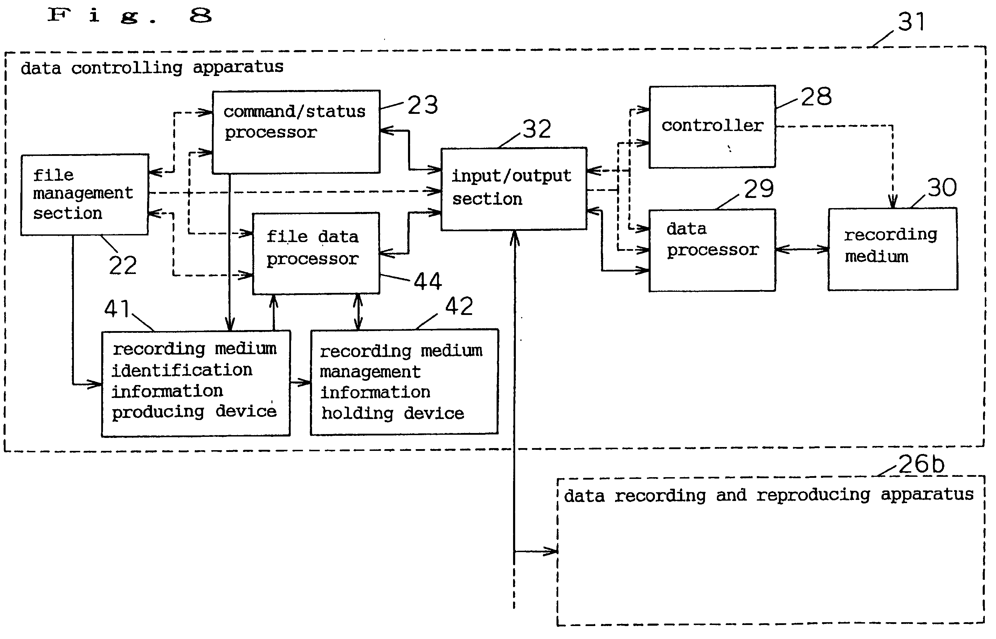

Fig. 8 is a block diagram of a data recording apparatus of a sixth embodiment.
Fig. 9(a) is a view illustrating an example of division of a file in a seventh embodiment, and a view before a file division process.
Fig. 9(b) is a view illustrating the example of division of a file in the seventh embodiment, and a view after the file division process.
Fig. 10 is a flowchart of a file dividing method in the seventh embodiment.
Fig. 11(a) is a view illustrating an example of trimming of a file in an eighth embodiment, and a view before a trimming process.
Fig. 11(b) is a view illustrating the example of trimming of a file in the eighth embodiment, and a view after the trimming process.
Fig. 12 is a flowchart of a file trimming method in the eighth embodiment.
Fig. 13(a) is a view illustrating an example of coupling of a file in a ninth embodiment, and a view before coupling.
Fig. 13(b) is a view illustrating the example of coupling of a file in the ninth embodiment, and a view after coupling.
Fig. 14 is a flowchart of a file coupling method in the ninth embodiment.
Fig. 15(a) is a view illustrating an example of deletion of a file in a tenth embodiment, and a view before deletion.
Fig. 15(b) is a view illustrating the example of deletion of a file in the tenth embodiment, and a view after deletion.
Fig. 15(c) is a view showing a state in the case where a third file is recorded after deletion of a file in the tenth embodiment.
Fig. 16 is a flowchart of a file deleting method in the tenth embodiment.
Fig. 17 is a view illustrating an example of copy of a file between devices in an eleventh embodiment.
Fig. 18 is a flowchart of a method of copying a file between devices in the eleventh embodiment.
Fig. 19(a) is a view illustrating an example of copy of a file between devices in a twelfth embodiment, and a view showing a state before a file division process.
Fig. 19(b) is a view illustrating the example of copy of a file between devices in the twelfth embodiment, and a view showing a state of the file division process and a process of copying divided files.
Fig. 20 is a flowchart of a method of copying a file between devices in the twelfth embodiment.
Fig. 21 is a block diagram of a computer in a thirteenth embodiment.
Fig. 22 is a view illustrating an example of an operation of writing a data onto an HDD in the thirteenth embodiment.
Figs. 23(a) to 23(c) are views illustrating the configuration of data output from a DV.
Figs. 24(a) to 24(c) are views illustrating realization by means of programs in a fourteenth embodiment.
Fig. 25 is a block diagram of a data recording apparatus of the prior art.

### (Legend of the Reference Numerals)

- 21: data controlling apparatus
- 26a, 26b: data recording and reproducing apparatus
- 22: file management section
- 23: command/status processor
- 24, 44: file data processor
- 25: input/output section for data controlling apparatus
- 27: input/output section for data recording and reproducing apparatus
- 28: controller
- 29: data processor
- 30: recording medium
- 31: double-write processor
- 41: recording medium identification information producing device
- 42: recording medium management information holding device
- 301: processor
- 302: memory
- 303: bus
- 304: IEEE 1394 interface
- 305: SCSI interface
- 306: DV
- 307: HDD
- 308: data input front DV 306
- 309: data obtained by extracting only required portion from data 308
- 310: reception buffer ensured on memory 302
- 311: PC

### Best Mode for Carrying Out the Invention

Hereinafter, embodiments of the invention will be described with reference to the drawings.

### (First Embodiment)

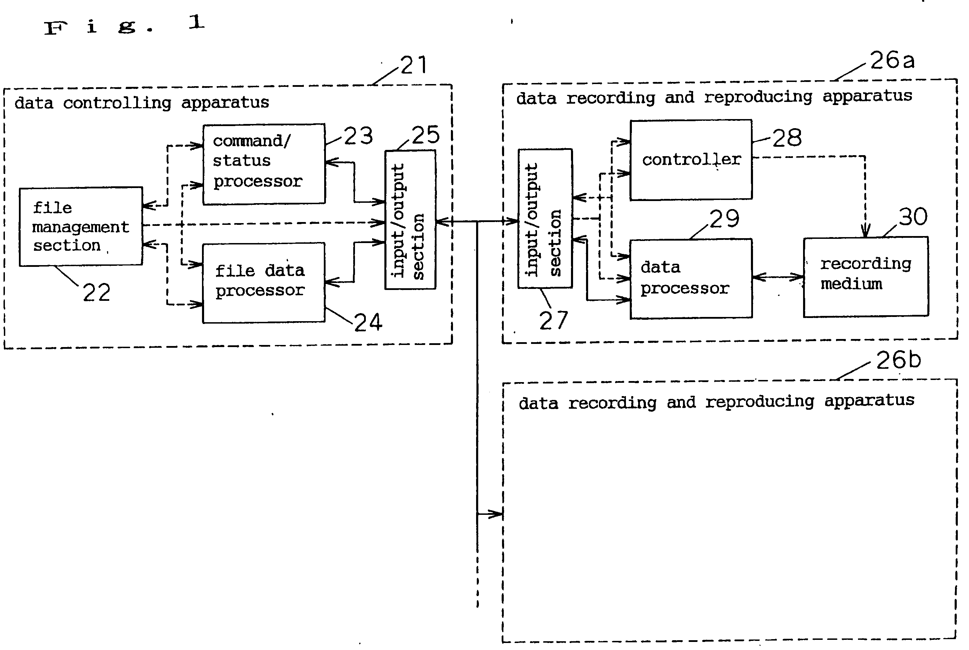

Fig. 1 is a block diagram showing a data controlling apparatus 21 and data recording and reproducing apparatuses 26a and 26b of a first embodiment of the invention, 22 denotes a file management section, 23 denotes a command/status processor, 24 denotes a file data processor, 25 denotes an input/output section for the data controlling apparatus, 27 denotes an input/output section for the data recording and reproducing apparatus, 28 denotes a controller, 29 denotes a data processor, and 30 denotes a recording medium. It is assumed that the data recording and reproducing apparatus 26b has a transmission function which is equivalent to that of the data recording and reproducing apparatus 26a.

First, the data controlling apparatus 21 transmits commands of data recording and reproduction, status inquiry, and the like to the data recording and reproducing apparatus 26a or 26b, receives a sent status, transmits a data to be recorded, and receives a reproduced data.

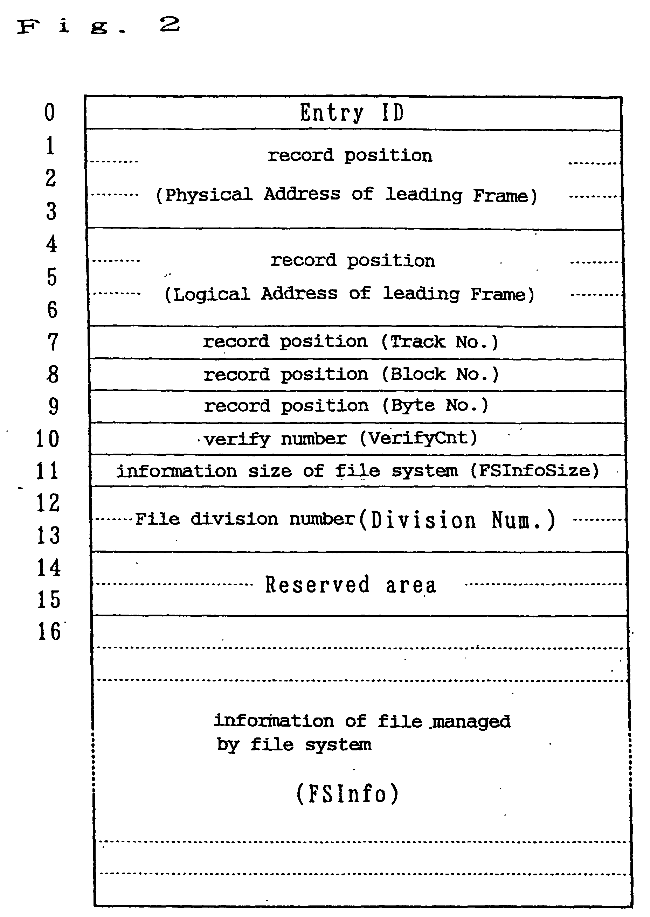

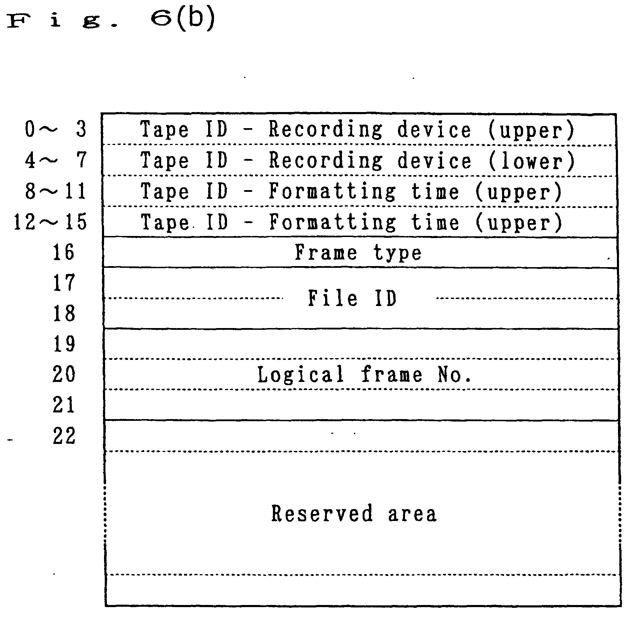

The file management section 22 manages files recorded on the recording medium 30, by using recording medium management information. The recording medium management information is an information group which is produced and managed with respect to the recording medium 30, and configured by medium information (see Fig. 6(a)) which is information relating to the recording medium 30, and file information (see Fig. 2) which is produced for each of the files recorded on the recording medium 30.

In accordance with instructions of file reading/writing and the like and sent from the file management section 22, the command/status processor 23 produces a command to be transmitted to the data recording and reproducing apparatus 26a or 26b, and as required processes a received status.

The file data processor 24 handles actual file data. For each file, file information is prepared, and file data and file information are rearranged in a predetermined format. If the capacity of a file is larger than a predetermined capacity, the file is divided into plural portions. File information for the original large-capacity file is produced, and, for each of the divided files, file information is produced.

It is assumed that, as described above, data to be processed by the file data processor 24 are obtained by previously processing stream data imaged for a conventional VTR so as to be handlable as a file, by means of a predetermined file system (see the application of International Patent Application No. PCT/JP98/03166).

In order to transmit and receive a command/status and a data, the input/output section 25 performs conversion between formats of a command/status and a data in the data controlling apparatus 21, and those on the transmission path connected to the data recording and reproducing apparatuses 26a and 26b.

The data recording and reproducing apparatus 26a performs reception of a transmitted data, transmission of a recorded and reproduced data, advice of a status, and the like in accordance with a command transmitted from the data controlling apparatus 21. Actually, the input/output section 27 performs transmission and reception, interprets the transmitted command, and instructs recording/reproduction of a data, and the like in accordance with the command. When a status is requested, a predetermined process is performed so as to obtain information thereof. In accordance with instructions from the input/output section 27, the controller 28 controls an operation of a mechanism for recording onto and reproduction from the recording medium 30.

When a recording operation is instructed, the data processor 29 performs predetermined processes such as error correcting encoding/modulation on a data input from the input/output section 27, to covert the data into a format in which the data can be recorded on the recording medium 30, and record the data on the recording medium 30.

After recording, in order to verify whether recording is conducted correctly or not, the file management section 22 instructs a reproduction operation through the command/status processor 23, predetermined processes of demodulation, block detection, and error correcting decoding are performed in the data processor 29 on a signal reproduced from the recording medium 30, a signal transmitted through the input/output section 27 and the input/output section 25 is input to the file data processor 24, and the file data processor 24 verifies whether recording is performed correctly or not.

As a verifying method, all data may be compared with one another, or a check sum may be used. Situations of error correcting decoding may be considered.

If, as a result of the verification, it is judged that recording is not performed correctly, the operation of recording the divided files on the recording medium 30 is again performed.

Simultaneously with recording of a file, recording medium management information configured by file information of files recorded on the recording medium 30 (Fig. 2 shows an example of file information produced for each file) and medium information relating to the recording medium 30 is updated.

When the recording medium is a tape, for example, recording medium management information can be recorded following on recording of files.

The file information shown in Fig. 2 may have the following contents. The number at the left end indicates a byte address of a region to which information is allocated. When the number is m, the information is 1-byte information and allocated to a (m+1)-th byte. When the number is n to n+(x-1), the information is x-byte infatuation and allocated to (n+1)-th to (n+x)-th bytes.

### (1) Information indicating the kind of the handled object (Entry ID):

000: This is used in the case where File - one file is handled as one file.
001: This is used in the case where File - one file (parent file) is divided and handled as plural files. The Entry has no entity to be recorded as a data.
010: In the case where division File - file of Entry ID = 001 is actually divided into k files, each of the k divided files has Entry of Entry ID = 010. A data corresponding to the Entry is actually recorded in Data frame.
011: This is used for describing the configuration of Directory (or folder), and has no entity to be recorded as a data.

### (2) Record position of a data (file) (Rec Pos.):

This is a physical address (a serial number produced for each track) of leading Frame, a logical address (a number which is added only to a frame where a valid data is recorded) of leading Frame, and information (Track No., Block No., and Byte No.) defining the position in Frame. In the case of Entry ID = 001 or 011 having no entity to be recorded as a data, this value is nullified.

### (3) Verify number (VerifyCnt):

This is information designating the serial number of recording in which recording was realized. In the case of Entry ID = 001 or 011 having no entity to be recorded as a data, this value is nullified.

### (4) Size of file system information (FSInfoSize):

Usually, a file is managed by a file system, on the basis of not only a data of the file but also information such as the file name/directory name, the file size, date and time information (date and time of preparing the file, date and time of updating the file, date and time of latest access, etc.), and file attribute (Read only, Hidden, System file, Directory, etc.). When a file is to be recorded, also such file system information must be recorded. In the size information, the amount of data of file system information is designated. This designation enables file system information which is different depending on a file system, to be recorded, and the file name/directory name to be handled in variable length.

### (5) File division number (Division Num.):

When Entry ID = 000, unassigned.
When Entry ID = 001, the total number of divided files (when divided into k files, set to k).
When Entry ID = 010, the sequence of divided files (when divided into k files, respectively set to 0 to k-1).
When Entry ID = 011, unassigned.

### (6) Information of a file in the file system (FSInfo):

The value of information relating to a file which is used in management by the above-mentioned file system is used as it is, as FSInfo.

With respect to a divided file, however, information of a file system may be used as it is in information relating to the original file described as Entry ID = 001. With respect to each of divided files described as Entry ID = 010, the file name of the divided file may be formed by adding information of the sequence in the division to the file name of the original file for producing the divided file, and the file size may be set to the size of the divided file.

The file data processor 24 of the data controlling apparatus 21 receives from the file management section 22 information which relates to the file that is instructed to be recorded, prepares file information of the file, and sends the file information to the data recording and reproducing apparatus 26a through the input/output section 25, so as to be recorded.

By using file information such as shown in Fig. 2, in the case of a large-capacity file, the file is divided so that, on a recording medium, the large-capacity file is handled as files of an appropriate capacity. When it is to be verified whether recording is performed correctly or not, therefore, verification is performed in the following manner. Unlike the prior art method, the whole of the large-capacity file is not checked, and, in the invention, a divided file of a small capacity is checked. Consequently, the required time period as a whole can be shortened.

If it is proved as a result of record verification that recording is not performed correctly, an incorrect portion is made by rerecording to have correct contents. In this case, unlike the prior art method, it is not required to rerecord the whole of the large-capacity file, the use amount of the recording medium can be reduced, and wear and fatigue of the recording medium can be lessened.

The process of dividing a file is performed with the objective of efficiently recording data. The user is not requested to know information whether recorded data are divided or not, and, if recorded data are divided, information relating to the manner of the division. This process is different in this point from a file division process which will be described later (for example, a seventh embodiment and the like), which is based on explicit user instructions, and which is performed as a work of editing video data.

### (Second Embodiment)

In the first embodiment, the configuration of file information in the case where, in order to enhance the error correction ability, a recorded data is checked after recording of the data, and, if recording is not performed correctly, recording is again performed has been shown. In a second embodiment, enhancement of the error correction ability by double writing a data will be described.

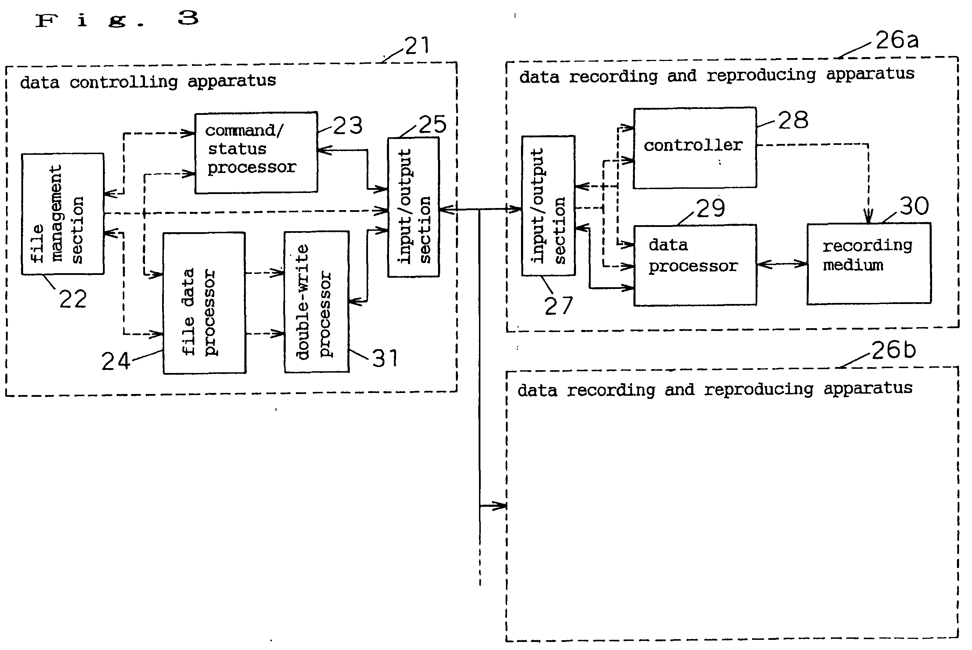

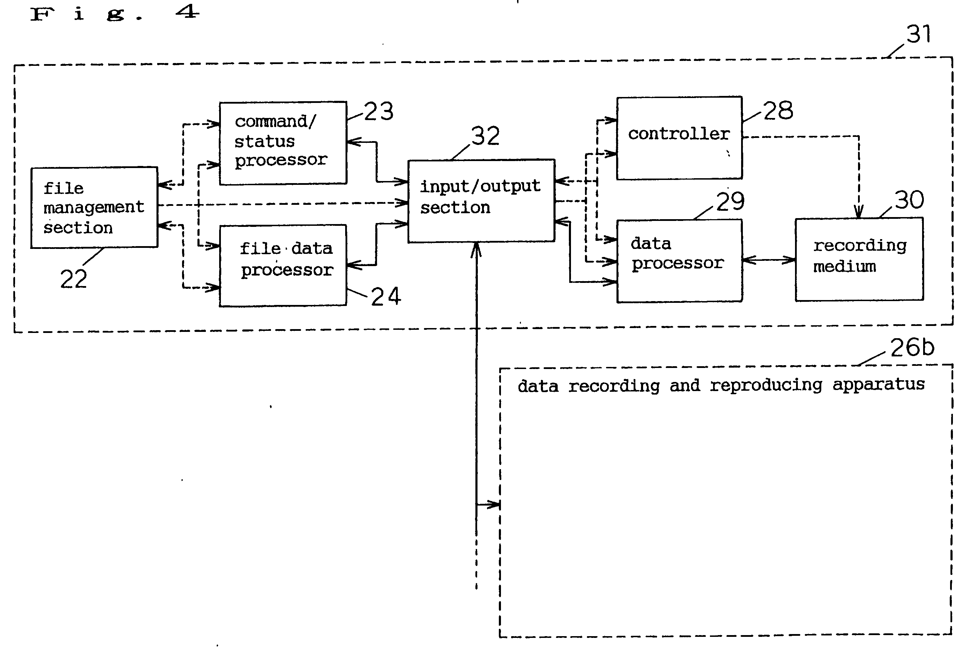

Fig. 3 is a block diagram showing the configuration of the embodiment. This embodiment is configured by adding a double-write processor 31 to the first embodiment. The double-write processor 31 rearranges data so that a data to be recorded is twice sent out from the input/output section 25 in accordance with a predetermined arrangement.

Hereinafter, description will be made with using a DV (Digital Video Cassette) standardized by HD DIGITAL VCR CONFERENCE, as an example.

For a DV, also a format for transmitting video and audio information between apparatuses is specified. A transmission sequence (DIF sequence) consisting of 150 transmission blocks (DIF blocks) of a block length of 80 Bytes is used as a basic unit. When 10 DIF sequences are transmitted, information for one frame is constituted. (Table 1) shows a first DIF sequence in a frame. Header means information of a data to be transmitted, SBC means subcode information, VAUX means video auxiliary information, Ax means audio information, and other sets of "x, y" means video information which is to be placed in record block y of track x. The remaining nine DIF sequences have contents in which the track numbers are sequentially circularly shifted.

**TABLE 1**

| block sequence | block contents | block sequence | block contents | block sequence | block contents |
|---|---|---|---|---|---|
| 0 | Header | 50 | 6,35 | 100 | 0,17 |
| 1 | SBC 0 | 51 | 8,89 | 101 | 4,125 |
| 2 | SBC 1 | 52 | 0,8 | 102 | A6 |
| 3 | VAUX 0 | 53 | 4,116 | 103 | 2,72 |
| 4 | VAUX 1 | 54 | A3 | 104 | 6,45 |
| 5 | VAUX 2 | 55 | 2,63 | 105 | 8,99 |
| 6 | A0 | 56 | 6,36 | 106 | 0,18 |
| 7 | 2,54 | 57 | 8,90 | 107 | 4,126 |
| 8 | 6,27 | 58 | 0,9 | 108 | 2,73 |
| 9 | 8,81 | 59 | 4,117 | 109 | 6,46 |
| 10 | 0,0 | 60 | 2,64 | 110 | 8,100 |
| 11 | 4,108 | 61 | 6,37 | 111 | 0,19 |
| 12 | 2,55 | 62 | 8,91 | 112 | 4,127 |
| 13 | 6,28 | 63 | 0,10 | 113 | 2,74 |
| 14 | 8,82 | 64 | 4,118 | 114 | 6,47 |
| 15 | 0,1 | 65 | 2,65 | 115 | 8,101 |
| 16 | 4,109 | 66 | 6,38 | 116 | 0,20 |
| 17 | 2,56 | 67 | 8,92 | 117 | 4,128 |
| 18 | 6,29 | 68 | 0,11 | 118 | A7 |
| 19 | 8,83 | 69 | 4,119 | 119 | 2,75 |
| 20 | 0,2 | 70 | A4 | 120 | 6,48 |
| 21 | 4,110 | 71 | 2,66 | 121 | 8,102 |
| 22 | A1 | 72 | 6,39 | 122 | 0,21 |
| 23 | 2,57 | 73 | 8,93 | 123 | 4,129 |
| 24 | 6,30 | 74 | 0,12 | 124 | 2,76 |
| 25 | 8,84 | 75 | 4,120 | 125 | 6,49 |
| 26 | 0,3 | 76 | 2,67 | 126 | 8,103 |
| 27 | 4,111 | 77 | 6,40 | 127 | 0,22 |
| 28 | 2,58 | 78 | 8,94 | 128 | 4,130 |
| 29 | 6,31 | 79 | 0,13 | 129 | 2,77 |
| 30 | 8,85 | 80 | 4,121 | 130 | 6,50 |
| 31 | 0,4 | 81 | 2,68 | 131 | 8,104 |
| 32 | 4,112 | 82 | 6,41 | 132 | 0,23 |
| 33 | 2,59 | 83 | 8,95 | 133 | 4,131 |
| 34 | 6,32 | 84 | 0,14 | 134 | A8 |
| 35 | 8,86 | 85 | 4,122 | 135 | 2,78 |
| 36 | 0,5 | 86 | A5 | 136 | 6,51 |
| 37 | 4,113 | 87 | 2,69 | 137 | 8,105 |
| 38 | A2 | 88 | 6,42 | 138 | 0,24 |
| 39 | 2,60 | 89 | 8,96 | 139 | 4,132 |
| 40 | 6,33 | 90 | 0,15 | 140 | 2,79 |
| 41 | 8,87 | 91 | 4,123 | 141 | 6,52 |
| 42 | 0,6 | 92 | 2,70 | 142 | 8,106 |
| 43 | 4,114 | 93 | 6,43 | 143 | 0,25 |
| 44 | 2,61 | 94 | 8,97 | 144 | 4,133 |
| 45 | 6,34 | 95 | 0,16 | 145 | 2,80 |
| 46 | 8,88 | 96 | 4,124 | 146 | 6,53 |
| 47 | 0,7 | 97 | 2,71 | 147 | 8,107 |
| 48 | 4,115 | 98 | 6,44 | 148 | 0,26 |
| 49 | 2,62 | 99 | 8,98 | 149 | 4,134 |

One DIF block is a block in which a 3-byte transmission header (DIF header) is added to a 77-byte data. As described above, ten DIF sequences each configured by 150 blocks constitute a video/audio signal of NTSC system for one frame.

A synchronization pattern, an address, and an error correction code are added to a 77-byte data obtained from one transmitted DIF block, thereby constituting one record block. A synchronization pattern is a fixed pattern which is used for separating record blocks in reproduction. An address is an ID number for identifying a record block. In this Way, ten Tracks are produced from ten DIF sequences, and each Track can be recorded on the tape. When the tape is reproduced, a reverse process is performed so that transmission is conducted while ten DIF sequences are produced from ten Tracks.

On the basis of the following procedure written in the C language, a data of 640 blocks (i = 0, ..., 4: j = 0, ..., 127) which can be recorded in one frame is allocated to DIF block blk0 in a seq0-th sequence in the transmission sequence, and DIF block blk1 in a seq1-th sequence.

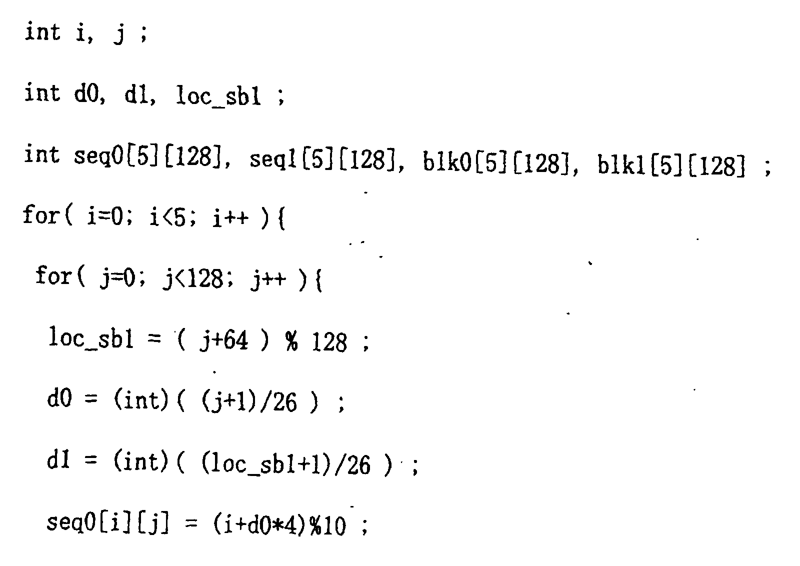

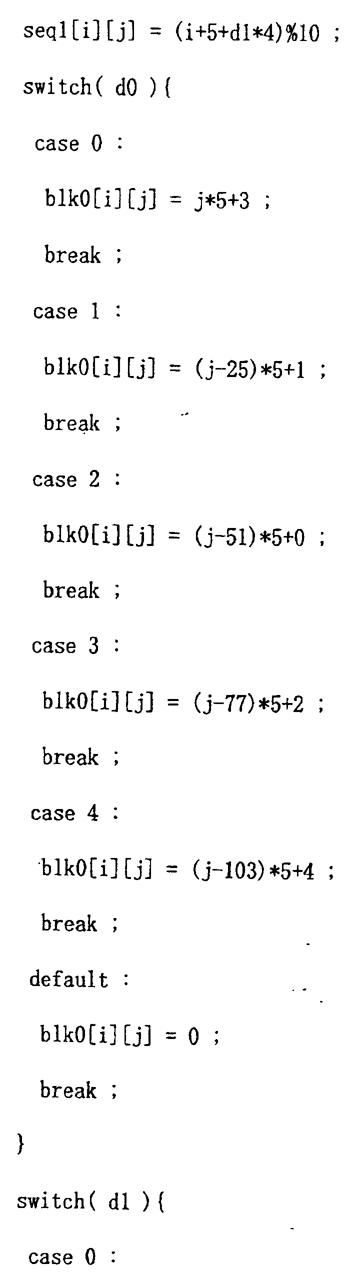

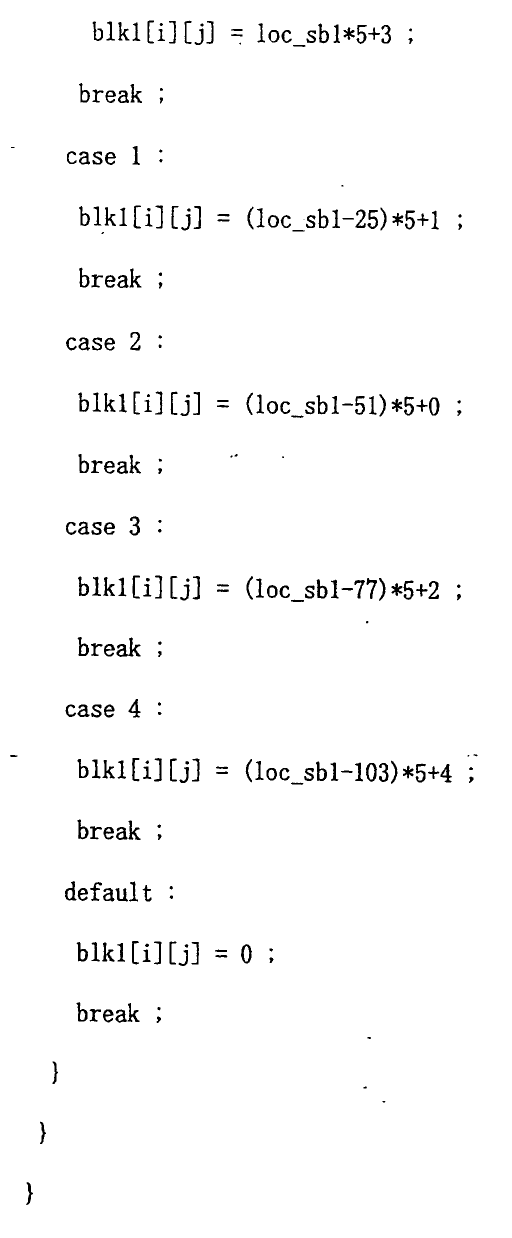

According to the above procedure, each two record blocks to which the same data is allocated are recorded on a recording medium in the unit of a record block consisting of a synchronization pattern, an address, a data, and an error correction code. The two record blocks to which the same data is to be recorded are arranged so as to be recorded by different heads, and with being separated from each other by a distance which is equal to or longer than a halt of the length of a data recording portion with respect to the width direction of the tape serving as a recording medium.

In the case where the recording medium is a tape, most problematic errors are the following four ones:
1) a damage which is formed in the longitudinal direction of the tape during running of the tape, by dust or the like attached to a post or the like;
2) a damage which is formed in the scanning direction of the tape during head scanning, by movement of a head;
3) read error due to clogging of the head (recoverable by means of head cleaning or the like); and
4) dropout due to dust attached to the tape, flaking of a magnetic material, a projection on the surface of the tape, or the like. When error 1) occurs, there arises a possibility that record blocks located at the same position with respect to the width direction of the tape are simultaneously broken. When error 2) or 3) occurs, there arises a possibility that record blocks in the same track are simultaneously broken. When error 2) or 4) occurs, there arises a possibility that record blocks in adjacent tracks are simultaneously broken.

When arrangement according to the procedure shown in the embodiment is employed, therefore, two transmission blocks to which the same data is allocated are recorded on the tape by different heads, and allocated to record blocks which are separated from each other by a distance which is equal to or longer than a half of the length of a data recording portion in a vertical direction with respect to the width direction of the tape. Even when, during reproduction, one of the record blocks makes an error, there arises substantially no possibility that also the other record block simultaneously makes an error. For recorded data, therefore, the error correction ability is greatly improved.

The invention may be applicable even in the case where, in the first and second embodiments, the data controlling apparatus 21 controls plural data recording and reproducing apparatuses. Furthermore, it may be possible that, at the same time when the data recording and reproducing apparatus 26a is instructed to perform recording, the data recording and reproducing apparatus 26b is instructed to perform reproduction so as to copy/move a file.

The data recording and reproducing apparatuses 26a and 26b may be apparatuses of the same specification, or those which have the same functions but are of different specifications.

The file information of the embodiment described above is an example. Even when the manner of holding information of a record position and file system information is structured anyway, for example, the same effects can be attained.

### (Third Embodiment)

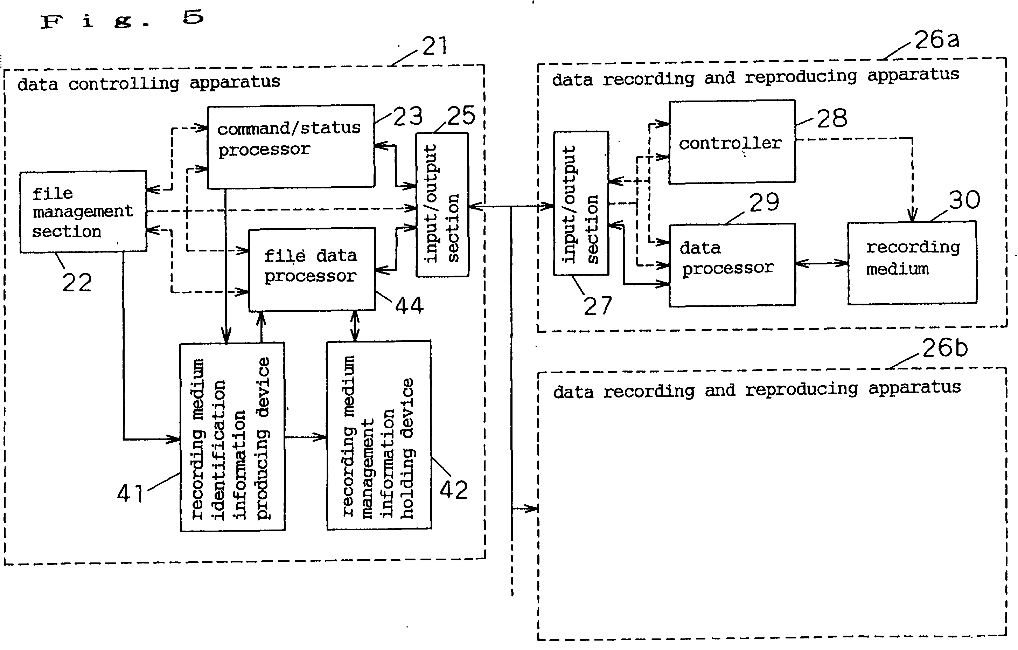

In the invention, also when the data controlling apparatus 21 and the data recording and reproducing apparatus 26 are combined into one apparatus, the first and second embodiments can be applied as they are. This embodiment is shown in Fig. 4. At this time, also a configuration may be possible in which the data controlling apparatus 21 and the data recording and reproducing apparatus 26a are combined into one apparatus and the data recording and reproducing apparatus 26b is connected.

### (Fourth Embodiment)

In a fourth embodiment, it will be described that management and recording of recording medium identification information enables a recording medium to be identified and a malfunction to be prevented from occurring.

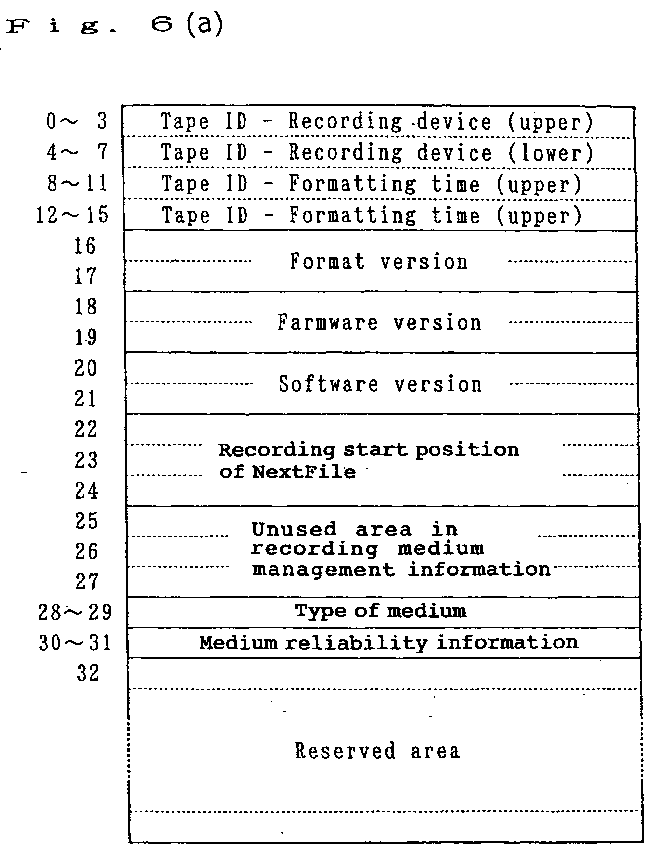

Fig. 5 is a block diagram showing the configuration of the fourth embodiment. This embodiment is configured by adding a recording medium identification information producing device 41 and a recording medium management information holding device 42 to the first embodiment, and replacing the file data processor 24 with a file data processor 44. For each of recording media, the recording medium identification information producing device 41 and the recording medium management information holding device 42 perform production of recording medium identification information, and holding of recording medium management information including the recording medium identification information. In the same manner as the file data processor 24, the file data processor 44 performs processes (preparation of file information, format conversion, and the like) of actual file data. In the embodiment, the file data processor is not required to have the file dividing function which the file data processor 24 has.

The recording medium management information holding device 42 manages and holds recording medium management information which is to be recorded on the recording medium 30 that is currently processed. Specifically, in the case where initialization is conducted, the initial value is held. In the case where the recording medium 30 is newly loaded, recording medium management information recorded on the recording medium 30 is read out and its contents are held. In synchronization with operations of recording and reproducing data, items in which updation is required are updated. For example, the remaining capacity of the recording medium must be updated each time when recording is newly performed, and, when a file is added, also file information of the file is added.

In the case where a new recording medium is used, before a file data is recorded, initialization of the recording medium in which the initial value of recording medium management information is set and then recorded must be performed. If there is no initial value, it is impossible to manage a recording medium by using recording medium management information.

During initialization of a recording medium, the recording medium identification information producing device 41 produces recording medium identification information which is a part of information constituting recording medium management information.

As described above, recording medium management information is recorded on the recording medium 30, and held by the recording medium management information holding device 42. When the value of recording medium identification information recorded on the recording medium 30 is compared with that of recording medium identification information held by the recording medium management information holding device 42, it is possible to verify whether the recording medium 30 has been replaced or not. That is, when the recording medium 30 is to be accessed, reproduction from the recording medium 30 is performed, the data processor 29 performs reproduced signal processes such as demodulation, detection of a record block, and error correcting decoding, the file data processor 44 extracts recording medium identification information, and the information is compared with recording medium identification information which is registered in recording medium management information held in the recording medium management information holding device 42.

In order to use recording medium identification information in verification of replacement of the recording medium 30, a value unique to a recording medium must be set in the information for each medium. An example of a method of setting such a value will be described.

When initialization is to be performed, the command/status processor 23 performs a process of inquiring of the data recording and reproducing apparatus 26a a characteristic identification number of the apparatus itself, via the input/output section 25 and the input/output section 27, and informs the recording medium identification information producing device 41 of the value of the number. The file management section 22 informs the recording medium identification information producing device 41 of date and time information relating to the date and time when initialization is to be performed. The recording medium identification information producing device 41 produces recording medium identification information from the characteristic identification number of the data recording and reproducing apparatus 26a and the date and time information, and informs the recording medium management information holding device 42 of the information. The recording medium management information holding device 42 sets the initial value of recording medium management information of a recording medium on which initialization is to be performed. When the recording apparatus/the date and time of initialization are combinedly designated, different recording media never have completely coincident recording medium identification information because the identical recording apparatus cannot simultaneously initialize different recording media.

In a DV of HD DIGITAL VCR CONFERENCE, it is specified that transmission is to be conducted by using an IEEE 1394 I/F. According to IEEE 1394, each apparatus has an identification number called Node Unique ID which is a value unique to the apparatus, and the identification number can be used as it is. As date and time information, information such as structure FileTime in the C language which expresses year/month/date/hour/minute/second by 64 bits may be used.

Fig. 6(a) shows an example of medium information. In the same manner as Fig. 2, the number at the left end indicates a byte address of a region to which information is allocated. Hereinafter, the contents of Fig. 6(a) will be described.

### (1) Tape ID:

This is recording medium identification information which has been described in this embodiment.

### (2) Format versio:

This is Version number of record Format for File recording such as the invention. Depending on this value, Version up such as addition of various information, change, deletion, and movement of a record position is enabled. Namely, from this value, it is possible to know Version of Format in which recording (managing tiles) is performed. This can clarify information indicated by each data, and the meaning of the value of each information.

### (3) Farmware version:

This is Version number of process contents (Farmware) of the data recording and reproducing apparatus. When process contents are changed because of bug/improvement of function/other circumstances, different values are used.

### (4) Software version:

This is Version number of process contents (irrespective of Software/Farmware/Hardware) of the data controlling apparatus. When process contents are changed because of bug/improvement of function/other circumstances, different values are used.

### (5) Recording start position of NextFile:

This is information indicating a position from which, in next file recording, recording is to be started. This may be used also as information indicating a record start position of recording medium management information in a recording medium. When a DV is used, for example, this position may be expressed by the value of Absolute track no.

### (6) Unused area in recording medium management information:

In recording medium management information, the amount of effective information is varied depending on the number of managed files, etc. Recording medium management information can be configured by medium information which is described here, and the file information shown in Fig. 2. In the case where information is arranged in front alignment, when information is to be next added, it is required to know a position where the addition is to be started. Information which is used for this purpose is management information empty region information.

### (7) Type of medium:

This is information relating to the shape and kind of a recording medium. When a recording medium is a tape, for example, the information shows the size of a cassette, the kind of the material of the tape, the record capacity, etc. In a recording medium such as a VHS or a DV in which Track pitch is changeable, also the information can be recorded.

In the case where the recording medium 30 is a tape, it is often that medium information recorded on the recording medium 30 cannot be immediately accessed. When a data of a file is to be recorded, therefore, auxiliary information (information which is produced and recorded for each record unit of data (Frame or Track) in accompanying the data) including recording medium identification information is simultaneously recorded. As a result, even when any portion at the recording medium (tape) 30 is reproduced, it is possible to always obtain recording medium identification information, and replacement of the recording medium 30 can be detected for a short time period.

At this time, when the recording medium is a DV, for example, it is assumed that auxiliary information is recorded with being placed in one or plural transmission blocks (DIF blocks) or record blocks. In this case, when record blocks to which the same auxiliary information is allocated are recorded with being placed in different positions of a track. As a result, the case where auxiliary information cannot be obtained because of a damage which is formed in parallel with the longitudinal direction of the tape can be prevented from occurring.

An example of auxiliary information which is to be recorded on the whole of a tape (for example, plural places on the tape) is shown in Fig. 6(b). Hereinafter, the contents of the figure will be described.

### (1) Tape ID:

This is recording medium identification information which has been described in the embodiment.

### (2) Frame type:

This is information for identifying Frame in which files are recorded in a usual manner, Frame in which recording medium management information is recorded, Frame in which an invalid data is recorded as a buffer region for ensuring the accuracy of assemble recording, etc.

### (3) File ID:

This is used for preventing combinations of recorded file data and file information from being confused, by setting a value correlated with file information of recording medium management information.

### (4) Logical frame no.:

This is a logical address for Frame in which a valid data is to be recorded.

When the above-mentioned information is recorded in all Frames, even in the case where any portion of the tape is reproduced, it is possible to determine recording medium management information relating to the tape, and clarify the kind of recorded data.

When, after a data is once recorded on the recording medium 30, and another data is to be recorded from the beginning of the recording medium, initialization must be again conducted. In the recording medium management information holding device 42, when an initial value is set in recording medium management information, therefore, the value produced in the initial initialization may be used as it is in recording medium identification information. As a result, the same recording medium is never provided with two or more sets of recording medium identification information, and hence the identification operation which is performed on the basis of recording medium identification information is not confused.

Namely, this method is used for solving a problem which may arise in the case where, for example, a cassette tape is used as a recording medium and a library wherein plural cassette tapes are managed with identifying them based on their recording medium identification information is structured. In this method, specifically, for a cassette tape having identification information "abcd," "efgh" which is different from initially produced value "abcd" is not newly produced and set as identification information which is to be set in reinitialization. Therefore, one cassette tape is not provided with two sets of identification information, and it is possible to prevent a malfunction in which one cassette tape is regarded as two cassette tapes, from occurring.

Next, a method will be described in which, in the case of the recording medium 30 is, for example, a cassette tape, only recording medium management information is rewritten so as to perform reinitialization more easily.

When a cassette tape is to be reinitialized as described above, in a track portion on which data are already recorded, recording medium identification information is incorporated and recorded in all tracks. When a prior art method is used, therefore, all recorded data are erased by overwriting data for Stuffing, or initialization must be conducted from the beginning. It is often that such a process requires a very long time period. When only a portion where previous recording medium management information is recorded is erased and new recording medium management information is then recorded, the time period required for reinitialization can be shortened. In other words, when previous recording medium management information is erased and new recording medium management information including information indicating that no data is recorded is then recorded, it is impossible to manage the place of a tape where a previously recorded data file is recorded. As a result, initialization is substantially completed. When a data is to be newly recorded in future, a data which is already recorded is eventually overwritten by the newly recorded data.

In the data recording apparatus described above, recording media produce inconsistent recording medium identification information, and the information is registered in recording medium management information and recorded on the recording media. When recording medium identification information of a recording medium is once known, therefore, the recording medium can be surely identified, so that a fatal disorder such as that recording is performed on a wrong recording medium is prevented from occurring. When recording medium identification information is recorded an the whole of a recording medium, the recording medium identification information can be obtained only by reproducing a part of the recording medium.

### (Fifth Embodiment)

The invention described above is configured so that recording medium identification information is registered in recording medium management information. Hereinafter, a fifth embodiment in which reliability of a recording medium is managed by registering medium reliability information.

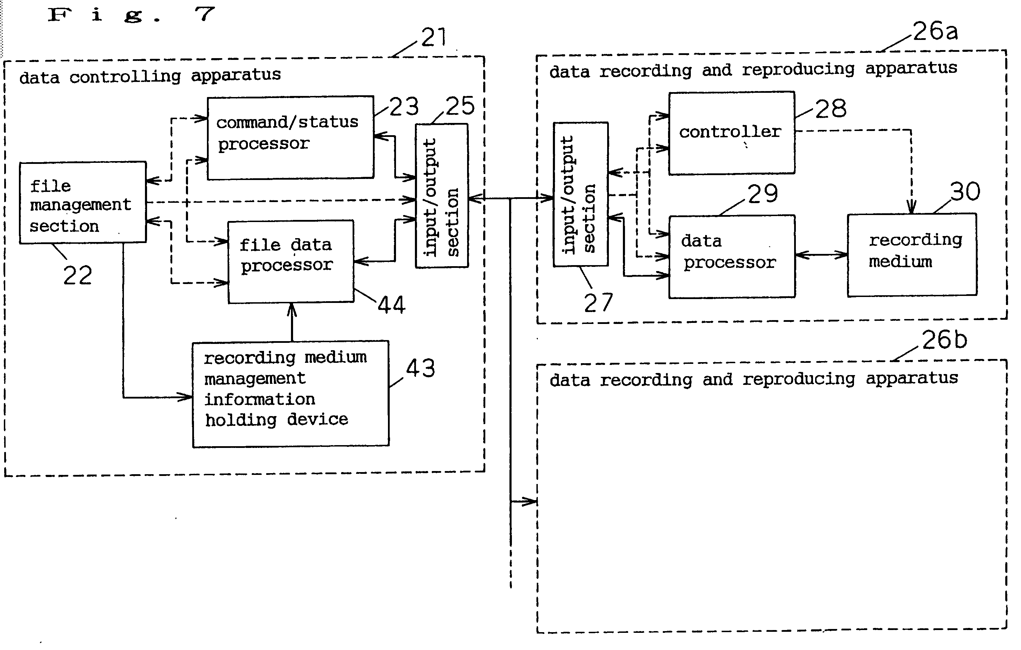

The block configuration is shown in Fig. 7. The blocks are identical with those of the first embodiment. A recording medium management information holding device 43 holds and manages recording medium management information in the same manner as the recording medium management information holding device 42 of the fourth embodiment, and further has a function of processing medium reliability information.

When a recording medium is a tape, errors which may be produced in reproduction are increased in amount by a damage that is formed in the surface of the tape as a result of a contact of the tape with a cylinder or a post during running, thereby producing a problem in that an excessively large number of errors are finally produced and such errors cannot be corrected. Before the situation reaches such a state, it is required to know that damages in the surface of a tape are increasing. When a recording medium is managed with using medium reliability information as one item of recording medium management information, a recording medium of low reliability (having a high possibility that data cannot be reproduced) can be detected on the basis of the medium reliability information. In such a case, the recording medium management information holding device 43 informs the file data processor 44 of the information, and the file data processor 44 gives an alarm to, for example, the user. A process such as that in which reproduction from the recording medium is performed but recording on the recording medium is not performed is conducted.

When the number of operations of accessing the tape is employed as a value which is to be actually used as medium reliability information, the value is approximately proportional to the amount of damages in the surface of the tape. When initialization is to be performed, for example, the following operations are conducted:
1) rewinding to the beginning of the tape;
2) recording of an empty track in which no data is disposed;
3) moving to a position where recording medium management information is recorded;
4) recording of recording medium management information;
5) moving to the position where recording medium management information is recorded; and
6) reproduction for verifying whether recording medium management information is correctly recorded or not.
Namely, the number of operations of accessing the tape is at least six.

When a data is to be recorded, the following operations are conducted:
1) moving to a data record position;
2) recording of the data;
3) moving to the data record position; and
4) reproduction for verifying whether the data is correctly recorded or not.
Although the tape is accessed four times, the access number is judged as eight times because the portion of the tape is accessed also in a recording operation which is conducted before and after the recording operation. However, it is seemed that, when append recording is conducted following on just-finished recording, a portion where recording has been conducted is substantially surely prevented from being accessed. When the value of eight accessing operations is once added, therefore, it is not required to newly add the value of eight accessing operations.

When reinitialization of a tape is performed, the state of the surface of the tape is unchanged. With respect to medium reliability information of new record management information, therefore, the value existing in previous recording medium reliability information is set as the initial value.

When medium reliability information is managed in this way, it is possible to substantially eliminate a danger that a recorded data cannot be reproduced, and the error correction ability is largely improved.

The invention may be applicable even in the case where, in the fourth and fifth embodiments, the data controlling apparatus 21 controls plural data recording and reproducing apparatuses. Furthermore, it may be possible that, at the same time when the data recording and reproducing apparatus 26a is instructed to perform recording, the data recording and reproducing apparatus 26b is instructed to perform reproduction so as to copy/move a file.

The data recording and reproducing apparatuses 26a and 26b may be apparatuses of the same specification, or those which have the same functions but are of different specifications.

### (Sixth Embodiment)

In the invention, also when the data controlling apparatus 21 and the data recording and reproducing apparatus 26 are combined into one apparatus, the fourth and fifth embodiments can be applied as they are. This embodiment is shown in Fig. 7. At this time, also a configuration may be possible in which the data controlling apparatus 21 and the data recording and reproducing apparatus 26a are combined into one apparatus and the data recording and reproducing apparatus 26b is connected.

The method of producing recording medium identification information and medium reliability information in the embodiment is an example. Even when any production method is employed, the invention is applicable.

### (Seventh Embodiment)

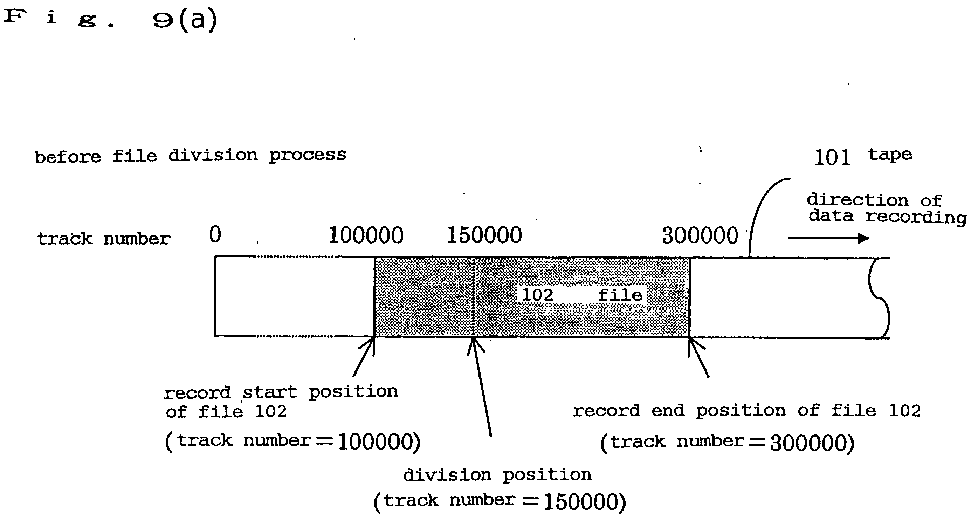

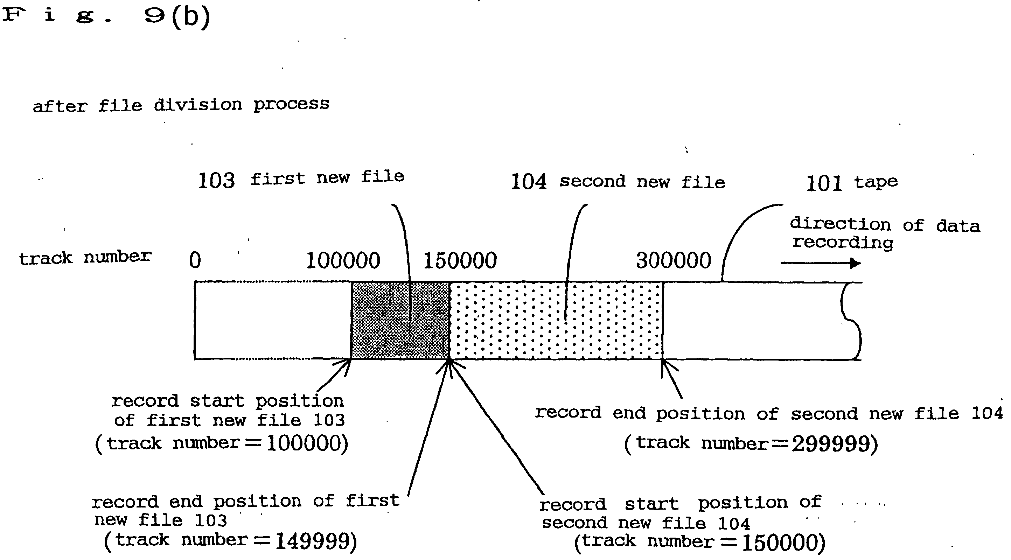

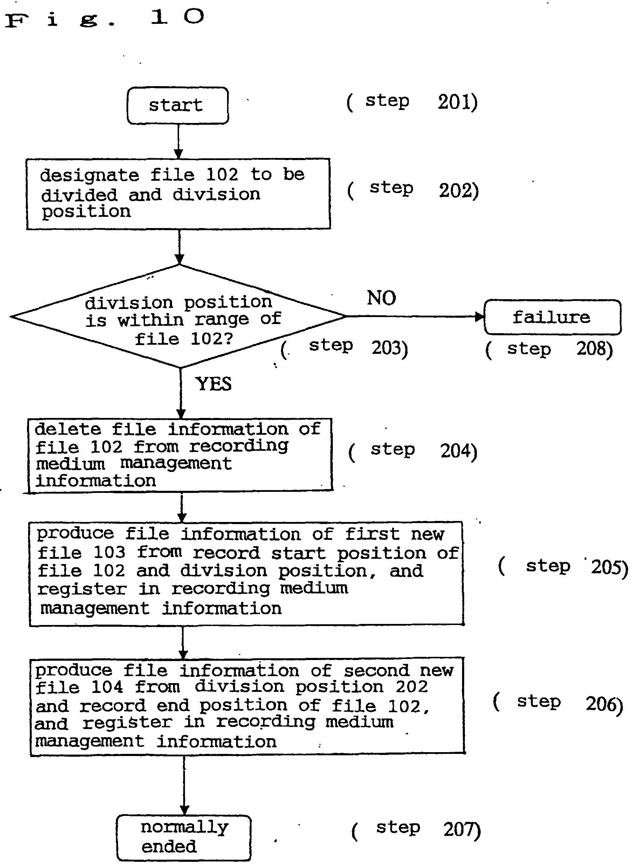

Hereinafter, a seventh embodiment of the invention will be described with reference to Figs. 9(a) to 9(b) and 10. Figs. 9(a) to 9(b) show an example of a file in a file system which manages a data recorded on a DV tape as a file (hereinafter, DV file system), 101 denotes a tape, 102 denotes a file, 103 denotes a first file which is produced as a result of division according a file dividing method in the embodiment, and 104 denotes a second file which is produced in the same manner. For example, a DV file system can be structured by recording medium management information configured by data such as those which have been described with reference to Figs. 2 and 6.

In a DV file system, the position (and the size) where the file 102 is to be recorded can be expressed by a record start position and a record end position in the tape 101. In the case of a DV, each track is provided with an absolute number (Absolute track No., hereinafter abbreviated as ATN) starting from the beginning of the tape. The record start position can be determined by using this value. When also the record end position is simultaneously managed, the number of used tracks is determined, and hence the file size is known. Alternatively, when the file size is managed, the number of used tracks is determined, and hence the record end position is known.

In the file 102 shown in Fig. 9(a), ATN = 100000 is the record start position, and ATN = 299999 is the record end position. When an image of NTSC system is recorded by using a DV, a data at 1 frame is recorded in 10 tracks. Therefore, the file is configured by data of 20000 frames.

The case where the user performs, for example, an edition work of dividing video data recorded as the file 102 into two files will be described.

In order to divide the file 102 into two files or the first and second files 103 and 104, file information must be produced for each file, and the record start position and the record end position (or the file size) of each file must be known.

While seeing damped information such as a time code or viewing a monitor (not shown) for displaying a reproduced image or the like, the user designates a position (ATN = 150000) where division is to be performed. As shown in Fig. 9(b), the record start position of the first file 103 is identical with that of the file 102 or ATN = 100000, and the record end position of the first file 103 is immediately before the division position or ATN = 149999. The record start position of the second file 104 is identical with the division position or ATN = 150000, and the record end position of the first file 103 is identical with that of the file 102 or ATN = 299999.

When information of each file is easily obtained in this way, the file 102 can be divided into two files at the division position shown in Fig. 9(a). In the case of a DV and an image of NTSC system, the files are configured by data of 5000 frames and those of 15000 frames, respectively. At this time, the division of the file 102 is realized only by changing the manner of expressing files in the file system, and involves no actual copy of data. Therefore, the division of the file can be conducted in a moment.

An example of an algorithm of dividing a file is shown in the form of a flowchart in Fig. 10. Referring to Fig. 10, the process is started from (step 201), and the file 102 which is to be divided and the division position are designated in (step 202). Any designating method may be employed.

In (step 203), it is judged whether the division position is within the range of the file 102 or not. If the division position is not within the range of the file 102, the control proceeds to (step 208) and the division process is ended as "division failure". If the division position is within the range of the file 102, the control proceeds to (step 204).

In (step 204), file information of the file 102 is deleted from recording medium management information, thereby deleting the file 102.

In (step 205), file information of the first file 103 is produced, and registered in recording medium management information, thereby realizing production of the file 103.

In (step 206), file information of the second file 104 is produced, and registered in recording medium management information, thereby realizing production of the file 104.
Thereafter, in (step 207), the control is ended as "normally ended".

As described above, in the embodiment, actual data copy on the tape never occurs and hence the file division can be conducted in a moment.

In the embodiment, one file is divided into two files. The invention may be applicable also in the case where one file is divided into three or more files.

Figs. 9(a) to 9(b) show an example of the record start position and record end position of each file, and the division position. These positions may be in any portion of a tape.

In the above, the recording medium is a tape. Any other recording medium may be used as far as it has a system in which one file is recorded in continuous regions of the recording medium and a file which is recorded by a file system in which a file is expressed by the record start position and the record end position is managed.

In a DV file system, a file on a tape is managed by using the record start position and the record end position. Alternatively, a file may be managed by using the record start position and the file size, or by using the record start position, the record end position, and the file size.

The algorithm shown in Fig. 10 is an example. The method of the embodiment can be realized by any algorithm as far as recording medium management information can be eventually rewritten in an appropriate manner.

The embodiment has been described as a method. When the file management section 22 in the configurations shown in Figs. 1 and 4 is provided with the function of the embodiment, it is possible to realize a data controlling apparatus or a data recording and reproducing apparatus which can perform the above-mentioned file division.

### (Eighth Embodiment)

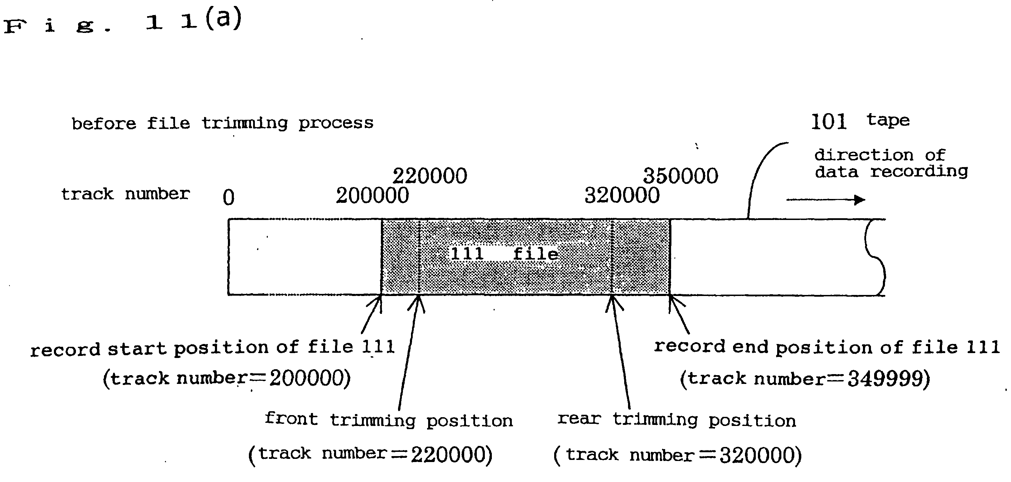

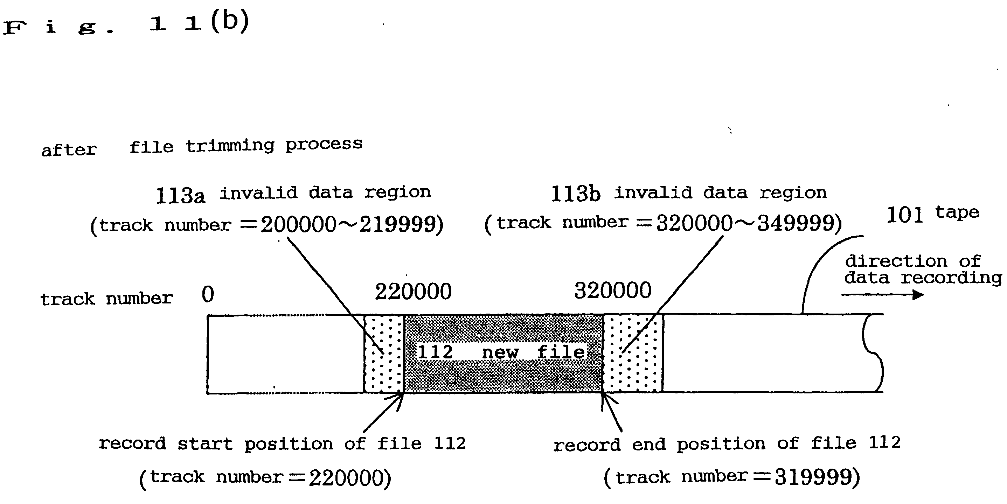

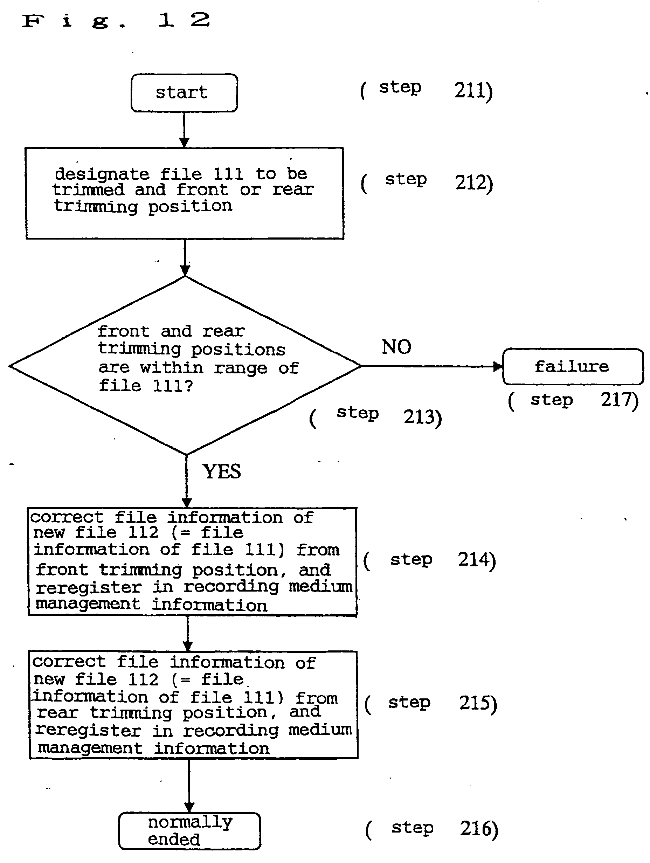

Hereinafter, an eighth embodiment of the invention will be described with reference to Figs. 11(a) to 11(b) and 12. Figs. 11(a) to 11(b) show an example of a file in a file system which is similar to the seventh embodiment, 101 denotes a tape, 111 denotes a file, 112 denotes a file (referred to as a new file) which is newly corrected by a file trimming method in the embodiment, and 113a and 113b denote invalid data regions.

In the file 111 shown in Fig. 11(a), ATN = 200000 is the record start position, and ATN = 349999 is the record end position. In the case of a DV and an image of NTSC system, the file is configured by data of 15000 frames.

In order to partly cut front and rear portions of the file 111, file information of the file 111 must be corrected, and the record start position and the record end position of the file must be known.

In the same manner as the above-described embodiment in which the user designates the division position, therefore, positions (ATN = 220000, 320000) where trimming is to be performed are designated as cut positions. As a result, as shown in Fig. 11(b), the record start position of the new file 112 is identical with the position where the starting position of the file is to be cut or ATN = 220000, and the record end position is immediately before the cut position or ATN = 319999. Among the portions of the file 111 which are deleted as a result of the cutting, the portion on the side of the start of the file 111 is the invalid data region 113a, and that on the side of the end of the file 111 is the invalid data region 113b. In a file which is managed by the file system, a portion where a data is recorded is a valid data region, and that where no data is recorded is an invalid data region. An invalid data region includes an unused region which can be used in future file recording. The record portion of a first data, and the record portion of a second data in the invention set forth in claim 26 correspond to the invalid data regions 113a and 113b of the embodiment, respectively.

When information of each file is easily obtained in this way, the file 111 can be trimmed at the cut positions shown in Fig. 11(a). In the case of a DV and an image of NTSC system, data of 15000 frames are converted into those of 10000 frames. At this time, the correction of the file 111 is realized by changing the manner of expressing files in the file system, and involves no actual copy of data. Therefore, the division of the file can be conducted in a moment.

An example of an algorithm of trimming a file is shown in the form of a flowchart in Fig. 12. Referring to Fig. 12, the process is started from (step 211), and the file 111 which is to be trimmed and the trimming positions are designated in (step 212). It is not required to designate both of the front and rear trimming positions, and only either one of the positions may be designated. Any designating method may be employed.

In (step 213), it is judged whether each of the trimming positions is within the range of the file 111 or not. If the division position is not within the range of the file 111, the control proceeds to (step 217), and the trimming process is ended as "trimming failure". If the trimming positions are within the range of the file 111, the control proceeds to (step 214).

In (step 214), the record start position of file information of the file 111 is corrected and then reregistered in recording medium management information. In the case where only the rear portion is to be trimmed, this process is skipped.

In (step 215), the record end position of file information of the file 111 is corrected and then reregistered in recording medium management information. In the case where only the front portion is to be trimmed, this process is skipped. At this timing, the file 111 is corrected so as to be formed as the new file 112. Thereafter, in (step 216), the control is ended as "normally ended".

As described above, in the embodiment, actual data movement on the tape never occurs and hence the file trimming can be conducted in a moment.

In the embodiment, Figs. 11(a) to 11(b) show an example of the record start position and record end position of each file, and the trimming positions. These positions may be in any portion of a tape.

In the above, the recording medium is a tape. Any other recording medium may be used as far as it has a system in which one file is recorded in continuous regions of the recording medium and a file which is recorded by a file system in which a file is expressed by the record start position and the record end position is managed.

In a DV file system, a file on a tape is managed by using the record start position and the record end position. Alternatively, a file may be managed by using the record start position and the file size, or by using the record start position, the record end position, and the file size.

The algorithm shown in Fig. 12 is an example. The method of the embodiment can be realized by any algorithm as far as recording medium management information can be eventually rewritten in an appropriate manner.

The embodiment has been described as a method. When the file management section 22 in the configurations shown in Figs. 1 and 4 is provided with the function of the embodiment, it is possible to realize a data controlling apparatus or a data recording and reproducing apparatus which can perform the above-mentioned file division.

### (Ninth Embodiment)

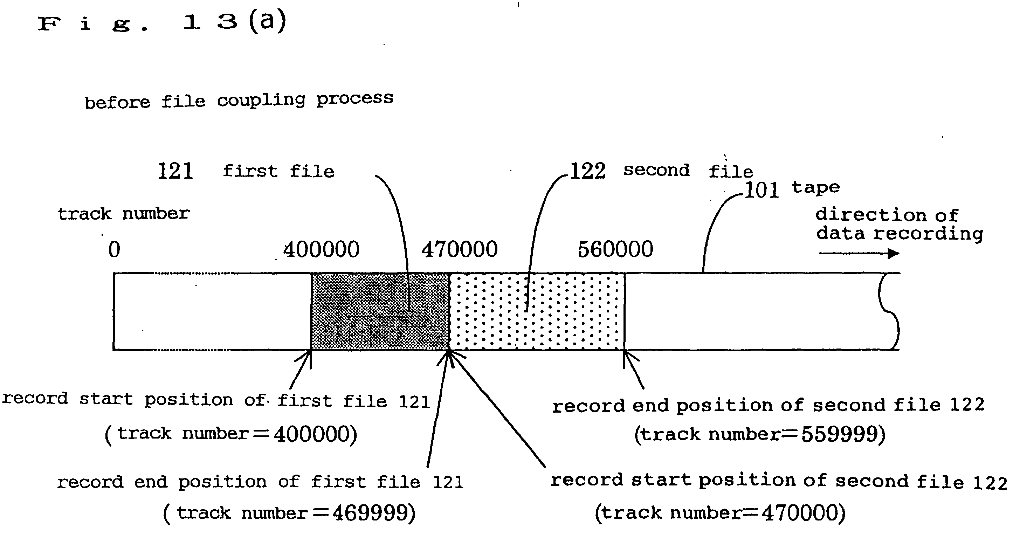

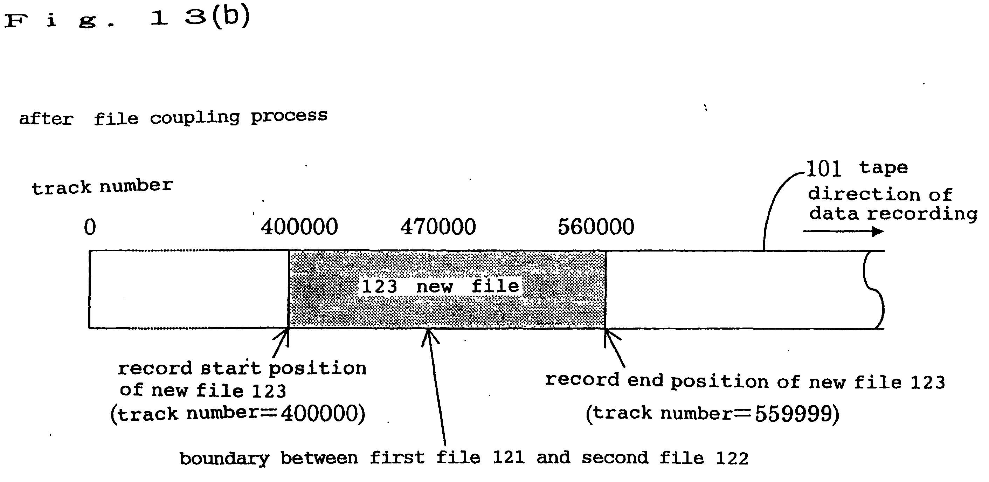

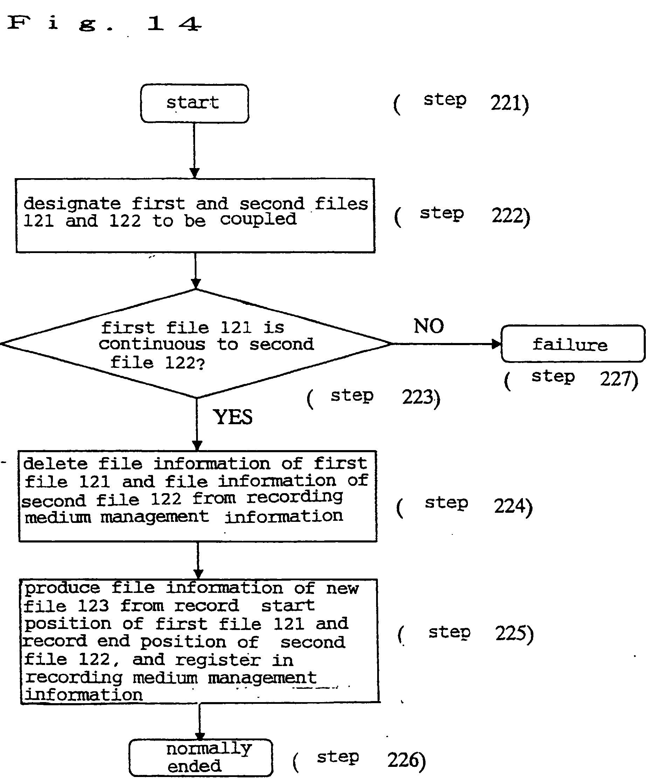

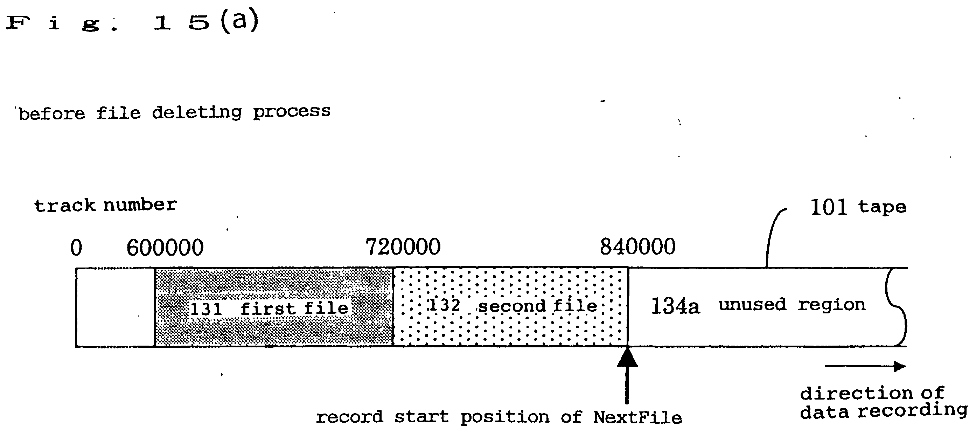

Hereinafter, a ninth embodiment of the invention will be described with reference to Figs. 13(a) to 13(b) and 14. Figs. 13(a) to 13(b) show an example of a file in a file system which is similar to the seventh embodiment, 101 denotes a tape, 121 and 122 denote files, and 123 denotes a file which is produced by a file coupling method of the embodiment.

In the file 121 shown in Fig. 13(a), ATN = 400000 is the record start position, and ATN = 469999 is the record end position. In the case of a DV and an image of NTSC system, the file is configured by data of 7000 frames. In the file 122, ATN = 470000 is the record start position, and ATN = 559999 is the record end position. In the case of a DV and an image of NTSC system, the file is configured by data of 8000 frames. Namely, the file 121 and the file 122 are recorded in continuous regions on the tape 101.

In order to couple these files to newly form the file 123, file information of the file 123 must be produced, and the record start position and the record end position of the file must be known.

When, as in the case of the files 121 and 122, the files are recorded in continuous regions on the tape 101, the record start position of the file 121 can be deemed as the record start position of the file 123, and the record end position of the file 122 can be deemed as the record end position of the file 123.

When information of the file is easily obtained in this way, the file 123 can be produced as shown in Fig. 13(b). At this time, only the method of expressing files in the file system is changed, and no actual copy or movement of data occurs. Therefore, the coupling of the files can be conducted in a moment.

An example of an algorithm of coupling files is shown in the form of a flowchart in Fig. 14. Referring to Fig. 14, the process is started from (step 221), and the file 121 and 122 which are to be coupled are designated in (step 222). Any designating method may be employed. In (step 223), it is judged whether the files 121 and 122 are continuous on the tape 101 or not. If the files are not continuous, the control proceeds to (step 227), and the coupling process is ended as "coupling failure". If the files are continuous, the control proceeds to (step 224).
In (step 224), file information of the files 121 and 122 is deleted from recording medium management information, thereby deleting the files 121 and 122.
In (step 225), file information of the file 123 is produced, and registered in recording medium management information, thereby realizing production of the file 123. Thereafter, in (step 226), the control is ended as "normally ended".

As described above, in the embodiment, actual data movement on the tape never occurs and hence the file coupling can be conducted in a moment.

In the embodiment, two files are coupled into one file. The invention may be applicable also in the case where three or more files are coupled to one another.

Figs. 13(a) to 13(b) show an example of the record start position and record end position of each file. These positions may be in any portion of a tape.

In the above, the recording medium is a tape. Any other recording medium may be used as far as it has a system in which one file is recorded in continuous regions of the recording medium and a file which is recorded by a file system in which a file is expressed by the record start position and the record end position is managed.

In a DV file system, a file on a tape is managed by using the record start position and the record end position. Alternatively, a file may be managed by using the record start position and the file size, or by using the record start position, the record end position, and the file size.

The algorithm shown in Fig. 14 is an example. The method of the embodiment can be realized by any algorithm as far as recording medium management information can be eventually rewritten in an appropriate manner.

The embodiment has been described as a method. When the file management section 22 in the configurations shown in Figs. 1 and 4 is provided with the function of the embodiment, it is possible to realize a data controlling apparatus or a data recording and reproducing apparatus which can perform the above-mentioned file division.

### (Tenth Embodiment)

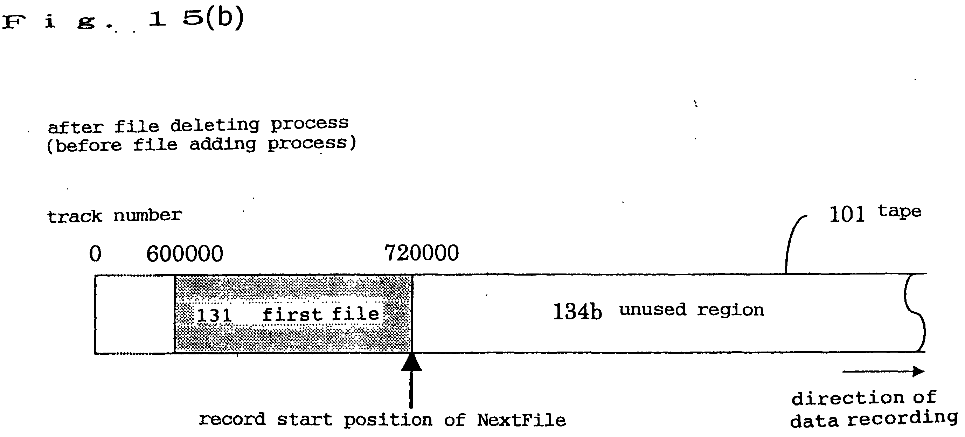

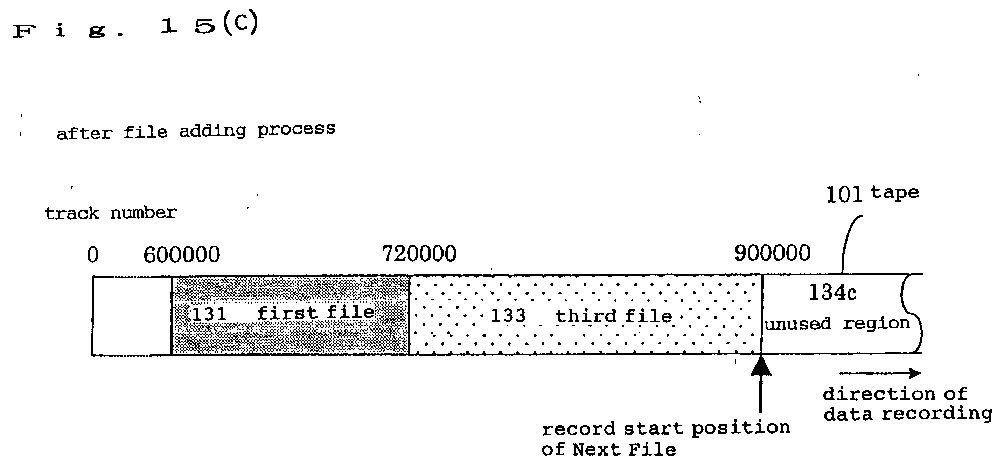

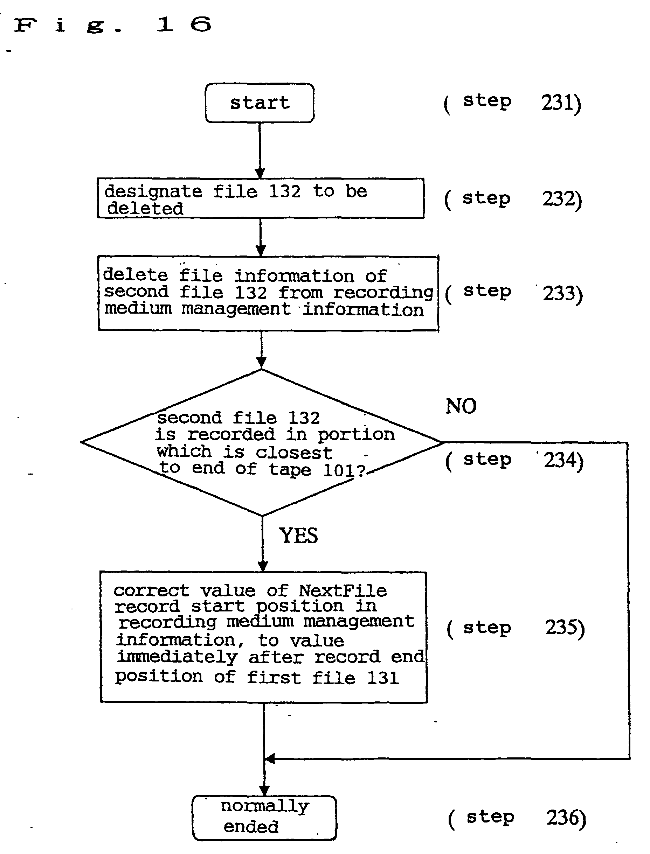

Hereinafter, a tenth embodiment of the invention will be described with reference to Figs. 15(a) to 15(b) and 16. Figs. 15(a) to 15(b) show an example of a file in a file system which is similar to the seventh embodiment, 101 denotes a tape, 131 and 133 denote files, and 132 denotes a file which is to be deleted by a file deleting method of the embodiment.

In the file 131 shown in Fig. 15(a), ATN = 600000 is the record start position, and ATN = 719999 is the record end position. In the case of a DV and an image of NTSC system, the file is configured by data of 12000 frames. In the file 132, ATN = 720000 is the record start position, and ATN = 839999 is the record end position. In the case of a DV and an image of NTSC system, the file is configured by data of 12000 frames. Namely, the file 121 and the file 122 are recorded in continuous regions on the tape 101. Recording start position of NextFile (840000) is information indicating a position from which the next file recording is to be started as shown in Figs. 6(a) to 6(b).

When the file 132 is to be deleted, it is requested to delete file information of the file 132 from recording medium management information. As a result of the deletion, the region from ATN = 720000 to ATN = 839999 where the file 132 was recorded is set as an invalid data region. When another file is recorded behind ATN = 840000, the region is set as a disabled region. It is assumed that the file 132 is a file recorded in a portion which is closest to the end of the tape 101. Namely, when the region behind ATN = 840000 is an unused region 134a, recording start position of NextFile is set to ATN = 840000, and the disabled region is continuous to the unused region. When recording start position of NextFile is moved to the beginning of the disabled region (ATN = 720000), the disabled region becomes a part of an unused region 134b shown in Fig. 15(b), so as to be available. When the third file 133 is then actually recorded, the state shown in Fig. 15(c) is obtained.

In this way, information of a file is easily obtained only by changing information of recording medium management information, thereby enabling the file 132 to be deleted without increasing the disabled region on the tape. At this time, actual data erasure never occurs and hence the file deletion can be conducted in a moment.

An example of an algorithm of deleting a file is shown in the form of a flowchart in Fig. 16. Referring to Fig. 16, the process is started from (step 231), and the file 132 which is to be deleted is designated in (step 232). Any designating method may be employed.
In (step 233), file information at the file 132 is deleted from recording medium management information, thereby deleting the file 132.
In (step 234), if the file 132 is a file recorded in a portion which is closest to the end of the tape 101, the control proceeds to (step 235). If not, the control proceeds to (step 236), and the control is ended as normally ended"
In (step 235), the value of recording start position of NextFile in recording medium management information is corrected, thereby enabling the region where the file 132 was recorded, to be reused.
Thereafter, in (step 236), the control is ended as "normally ended".

As described above, in the embodiment, actual data erasure on the tape never occurs and hence the file deletion can be conducted in a moment.

In the embodiment, the number of files which are on the tape and in which the record positions and the sizes are arbitrarily set is two. The invention may be applicable also in the case where one or any number of files are recorded. The record starting position and the record end position of a file may be in any portion of a tape. Any other recording medium may be used as far as it has a system in which data that are recorded in continuous regions of the recording medium are managed and accessed as a file, a position immediately after the file recorded in a portion which is closest to an end is held as recording start position of NextFile, and, when a new file is to be next recorded, recording is performed with starting from recording start position of NextFile.

The algorithm shown in Fig. 16 is an example. The method of the embodiment can be realized by any algorithm as far as recording medium management information can be eventually rewritten in an appropriate manner.

The embodiment has been described as a method. When the file management section 22 in the configurations shown in Figs. 1 and 4 is provided with the function of the embodiment, it is possible to realize a data controlling apparatus or a data recording and reproducing apparatus which can perform the above-mentioned file division.

The portion immediately before a file which is to be deleted may be an invalid data region such as shown in Fig. 11(b), in place of a file. When recording start position of NextFile is moved to the beginning of the invalid data region, it is possible to apply the embodiment of the invention so as to attain the same effects.

### (Eleventh Embodiment)

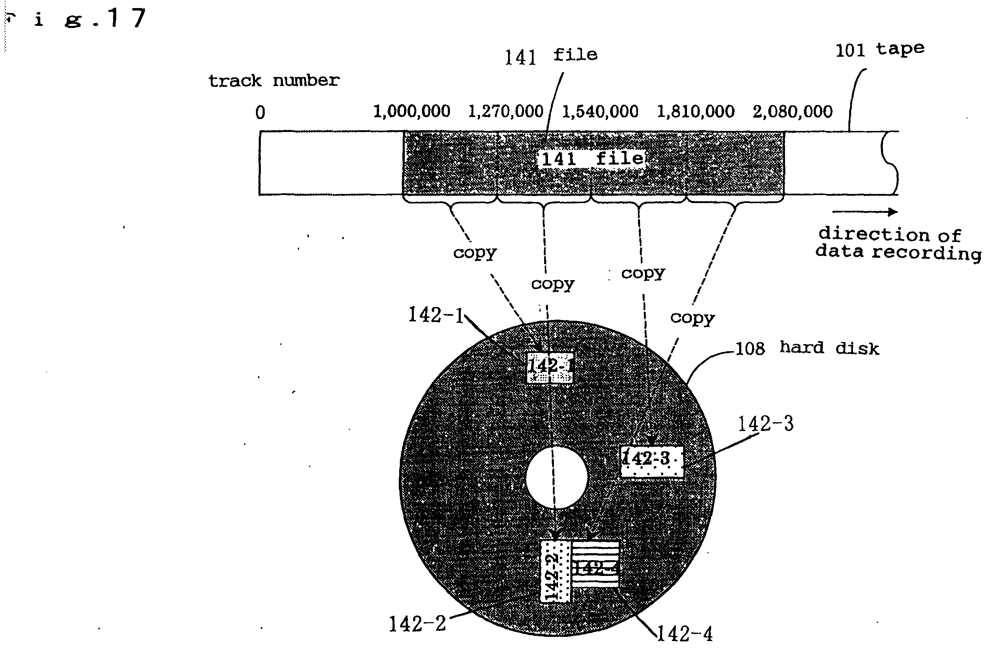

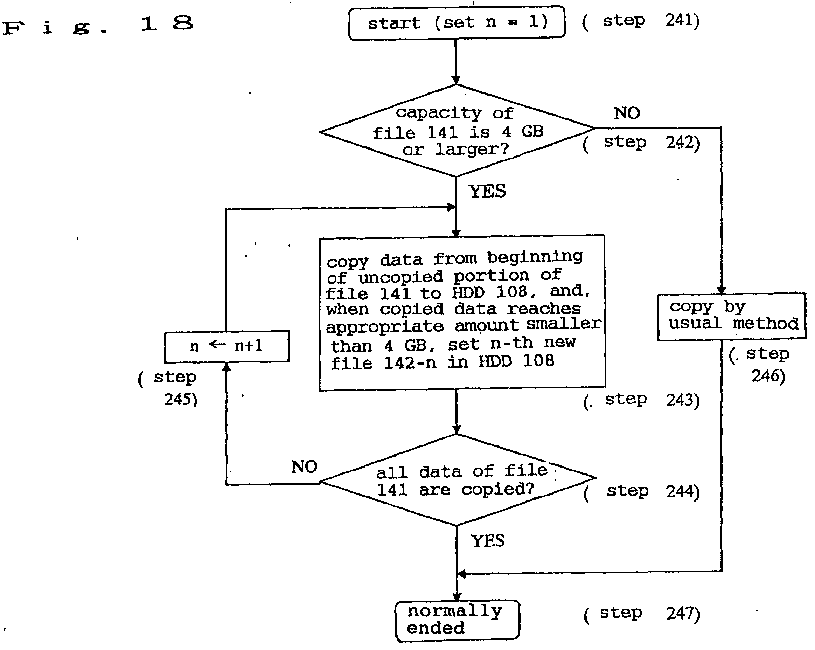

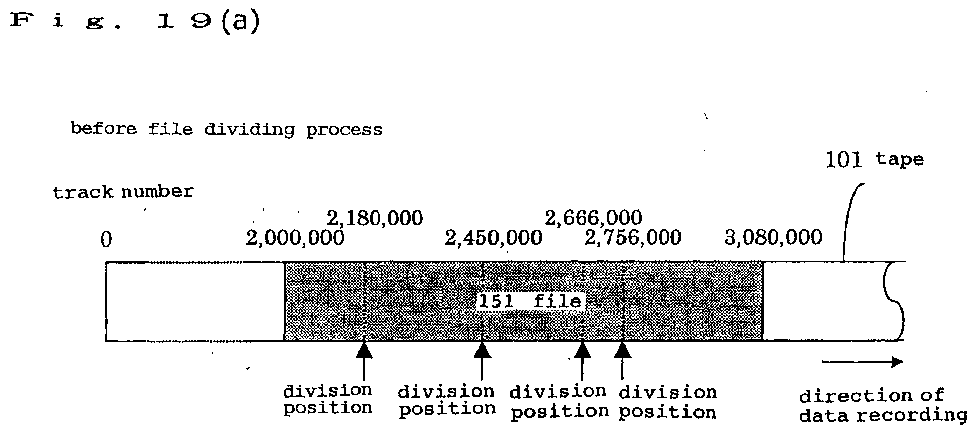

Hereinafter, an eleventh embodiment of the invention will be described with reference to Figs. 17 and 18.

In the embodiment, a file handling method will be described in which, in execution of a copy command issued by the user, a file is automatically divided. That is, the process of dividing a file in the embodiment does not require explicit user instructions. This is different from the above-described embodiments. In division, however, it is possible to reflect an intention of the user. This will be described later.

Fig. 17 is a conceptual diagram of copying of a file between devices having different file systems. In Fig. 17, 101 denotes a tape, 141 denote files which are recorded on the tape 101, 108 denotes a hard disk, and 142-1, 142-2, 142-3, and 142-4 are files which are copied from the tape 101 to the hard disk 108 (hereinafter, HDD) by a method of copying a file of the embodiment.

It is assumed that a file size which can be handled by a file system for managing a file to be recorded on the tape 101 is smaller than 1 TB, and a file size which can be handled by a file system for managing a file to be recorded on the HDD 108 is smaller than 4 GB (in the case where the file system is FAT32 system).

In the file 141 shown in Fig. 17, ATN = 1000000 is the record start position, and ATN = 2079999 is the record end position. In the case of a DV and an image of NTSC system, the file is configured by data of 108000 frames (= one hour). Since one frame is configured by 120000 bytes, the file size is about 12 GB. Even when the free capacity of the HDD 108 is lager than 12 GB, the file 141 cannot be copied or moved to the HDD 108.

A method of copying the file 141 having a size which is equal to or larger than 4 GB, to the HDD 108 while automatically dividing the file will be described. When the size of a file produced on the HDD 108 reaches 3,240,000,000 bytes, a next file is produced.

First, with starting from the record start position of the file 141, data are sequentially copied to the file 142-1 on the HDD 108. At the timing when the size of the file 142-1 reaches 3,240,000,000 bytes, the recording into the file 142-1 is stopped, and the subsequent data are recorded into the file 142-2. Similarly, the files 142-3 and 142-4 are prepared.

With respect to the value of 3,240,000,000 bytes, when the recording medium is a DV, the corresponding frame number is changed in accordance with the system as follows:
1) NTSC system: 1 frame = 120000 bytes and corresponding to 27000 frames;
2) PAL system: 1 frame = 144000 bytes and corresponding to 22500 frames;
3) HiVision (525 lines - 60 Hz) system: 1 frame = 240000 bytes and corresponding to 13500 frames; and
4) HiVision (625 lines - 50 Hz) system: 1 frame = 288000 bytes and corresponding to 11250 frames.

Therefore, any file can be formed as a data stream which is beautifully partitioned in the unit of Frame. Partitioning in the unit of Frame enables the copied files 142-1, 142-2, 142-3, and 142-4 to be singly used or combinedly used.

A method of copying the file 141 from the tape 101 to the HDD 108 is shown in the form of a flowchart in Fig. 18. Referring to Fig. 18, the process is started with setting a variable n to 1 in (step 241).

In (step 242), if the size of the file 141 is equal to or larger than 4 GB, the control proceeds to (step 243). If the size is smaller than 4 GB, the control proceeds to (step 246).

In (step 243), copying to the HDD 108 is performed as a single file 142-n from the beginning of the data stream of the file 141 which has not yet been copied. The copying operation is continued until the copy amount reaches a predetermined size or to FileEnd of the file 141.

In (step 244), it is checked whether copying of the whole of the file 141 has been completed or not. If the copying has been completed, the control proceeds to (step 247). If the copying has not been completed, the variable n is incremented by 1 in (step 245) and the control returns to (step 243).

In (step 246), since the size of the file 141 is smaller than 4 GB, copying is performed in the same method as a usual file copy and the control proceeds to (step 247).

In (step 247), the control is ended as "normally ended".

As described above, in the embodiment, when a large-capacity file is to be copied to the HDD, copying is performed while automatically dividing the file. As a result, copying between two recording media having different maximum handlable file sizes is enabled.

In the embodiment, a file of the copy source is divided into four files each having a size of 3,240,000,000 bytes. The sizes of divisions may have any value as far as the size is smaller than the maximum one which can be handled by a file system of the copy destination. It is not required to have the same size. Even when the division number has any value, the invention is applicable.

Fig. 17 shows an example of the record start position and record end position of each file. These positions may be in any portion of a tape. The recording positions on the HDD 108 may be arbitrarily selected.

In the above, copying is conducted from a tape to an HDD which is managed by a file system of FAT32 system. Any recording medium may be used as far as file systems which respectively manage the recording medium of the copy source and that of the copy destination have different maximum handlable file sizes.

The algorithm shown in Fig. 18 is an example. The method of the embodiment can be realized by any algorithm as far as a file of the copy source is copied with being divided into plural files in the copy destination.

In the embodiment, the figures are shown so that files are recorded on the same medium or an HDD. Actually, files are dispersedly recorded in different partitions, different media, or different devices.

As a criterion of the judgement on division of a data stream and formation of a next file, a fixed size is used in the embodiment. Alternatively, a fixed frame number may be used, or a check of the remaining amount of an HDD may be included in the criterion.

Furthermore, auxiliary information may be monitored while supplying data, and division may be conducted at a position where dates and times of recording are discontinuous (partitions at each elapse of a specific time period may be used). Alternatively, division may be conducted in accordance with the contents of recording (commercial cut and the like). Division may be conducted at a position at which recording contents are judged to be apparently switched over. A scene change may be detected white monitoring video data themselves, and division may be conducted at a position of the scene change.

### (Twelfth Embodiment)

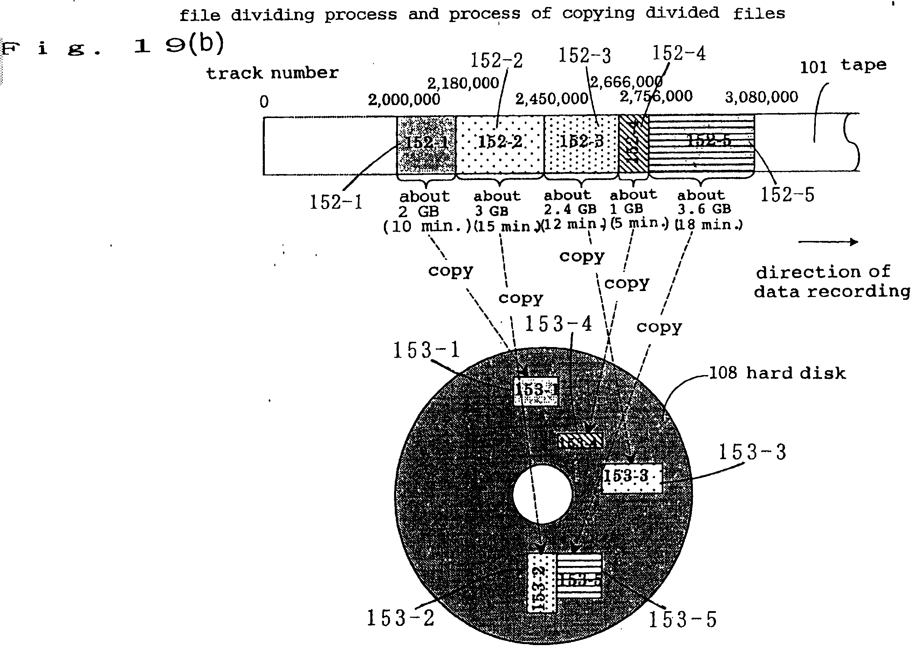

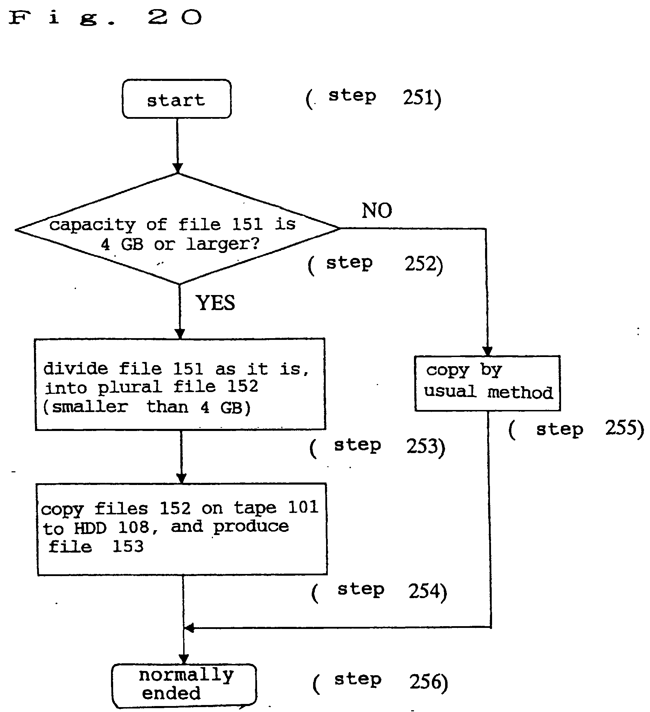

Hereinafter, a twelfth embodiment of the invention will be described with reference to Figs. 19(a) to 19(b) and 20.

Figs. 19(a) to 19(b) are conceptual diagrams of copying of a file between devices having different file systems. In Fig. 17, 101 denotes a tape, 151 denote files which are recorded on the tape 101, 152-1, 152-2, 152-3, 152-4, and 152-5 are files which are obtained by dividing the file 151, 108 denotes a hard disk, 153-1, 153-2, 153-3, 153-4, and 153-5 are files which are copied from the tape 101 to the hard disk 108 (hereinafter, HDD) by a method at copying a file of the embodiment.

It is assumed that a file size which can be handled by a file system for managing a file to be recorded on the tape 101 is smaller than 1 TB, and a file size which can be handled by a file system for managing a file to be recorded on the HDD 108 is smaller than 4 GB (in the case where the file system is FAT32 system).

In the file 141 shown in Fig. 17, ATN = 1000000 is the record start position, and ATN = 2079999 is the record end position. In the case of a DV and an image of NTSC system, the file is configured by data of 108000 frames (= one hour). Since one frame is configured by 120000 bytes, the file size is about 12 GB. Even when the free capacity of the HDD 108 is lager than 12 GB, the file 141 cannot be copied or moved to the HDD 108.

It is assumed that a file size which can be handled by a file system for managing a file to be recorded on the tape 101 is smaller than 1 TB, and a file size which can be handled by a file system for managing a file to be recorded on the HDD 108 is smaller than 4 GB (in the case where the file system is FAT32 system).

In the file 151 shown in Figs. 19(a) to 19(b), ATN = 2000000 is the record start position, and ATN = 3079999 is the record end position. In the case of a DV and an image of NTSC system, the file is configured by data of 108000 frames (= one hour). Since one frame is configured by 120000 bytes, the file size is about 12 GB. Even when the free capacity of the HDD 108 is lager than 12 GB, the file 151 cannot be copied or moved to the HDD 108.

When the file 151 of a size of 4 GB or larger is to be copied or moved to the HDD 108, therefore, the file 151 is first automatically divided into plural files 152-n (n = 1 to 5). At this time, each of the files is set so as to have a size smaller than 4 GB. In the case of Figs. 19(a) to 19(b), the files have sizes of 2,160,000,000 bytes, 3,240,000,000 bytes, 2,592,000,000 bytes, 1,080,000,000 bytes, and 3,888,000,000 bytes, respectively.

Next, the five divided files 152-1, 152-2, 152-3, 152-4, and 152-5 are sequentially copied to the HDD 108 to prepare the files 153-1, 153-2, 153-3, 153-4, and 153-5.

As far as, in the file division, partition is performed in the unit of a frame (in the same manner as the eleventh embodiment), any file can be formed into a data stream which is beautifully partitioned in the unit of Frame. Partitioning in the unit of Frame enables the copied files 142-1, 142-2, 142-3, and 142-4 to be singly used or combinedly used.

A method of copying the file 151 from the tape 101 to the HDD 108 is shown in the form of a flowchart in Fig. 20. Referring to Fig. 20, the process is started from (step 251).

In (step 252), if the size of the file 151 is equal to or larger than 4 GB, the control proceeds to (step 253). It the size is smaller than 4 GB, the control proceeds to (step 255).

In (step 253), the file 151 is divided into n files 152-1 to 152-n each having a size which is smaller than 4 GB. As a method of the division, for example, the file dividing method in the seventh embodiment of the invention may be used.

In (step 254), the files 152-1 to 252-n which are prepared as a result of the division in (step 253) are copied to the HDD 108 so as to prepare files 153-1 to 153-n. The control then proceeds to (step 256), and is ended as "normally ended".

In (step 255), since the size of the file 151 is smaller than 4 GB, copying is performed from the tape 101 to the HDD 108 in the same method as a usual file copy, and the control proceeds to (step 256), and is ended as "normally ended".

As described above, in the embodiment, when a large-capacity file is to be copied to the HDD, copying is performed while automatically dividing the file. As a result, copying between two recording media having different maximum handlable file sizes is enabled.

In the embodiment, a file of the copy source is divided into five files each having a size which is in the unit of a minute so as to be recordable on a DV. The sizes of divisions may have any value as far as the size is smaller than the maximum one which can be handled by a file system of the copy destination. It is not required to have the same size. Even when the division number has any value, the invention is applicable.

Fig. 17 shows an example of the record start position and record end position of each file. These positions may be in any portion of a tape. The recording positions on the HDD 108 may be arbitrarily selected.

The algorithm shown in Fig. 20 is an example. The method of the embodiment can be realized by any algorithm as far as a file of the copy source is copied with being divided into plural files in the copy source and the files are copied in the copy destination.

In the embodiment, the figures are shown so that files are recorded on the same medium or an HDD. Actually, files are dispersedly recorded in different partitions, different media, or different devices.

As a criterion of a position where a file is to be divided, an appropriate size is used in the embodiment. Alternatively, a fixed frame number may be used, or a check of the remaining amount of an HDD may be included in the criterion.

Furthermore, auxiliary information may be monitored while supplying data, and division may be conducted at a position where dates and times of recording are discontinuous (partitions at each elapse of a specific time period may be used). Alternatively, division may be conducted in accordance with the contents of recording (commercial cut and the like). Division may be conducted at a position at which recording contents are judged to be apparently switched over. A scene change may be detected while monitoring video data themselves, and division may be conducted at a position of the scene change.

### (Thirteenth Embodiment)

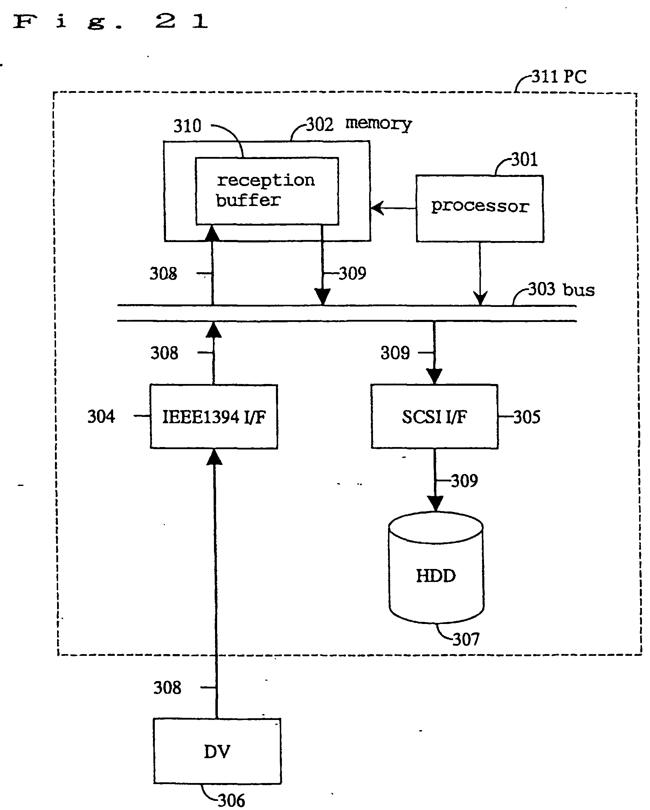

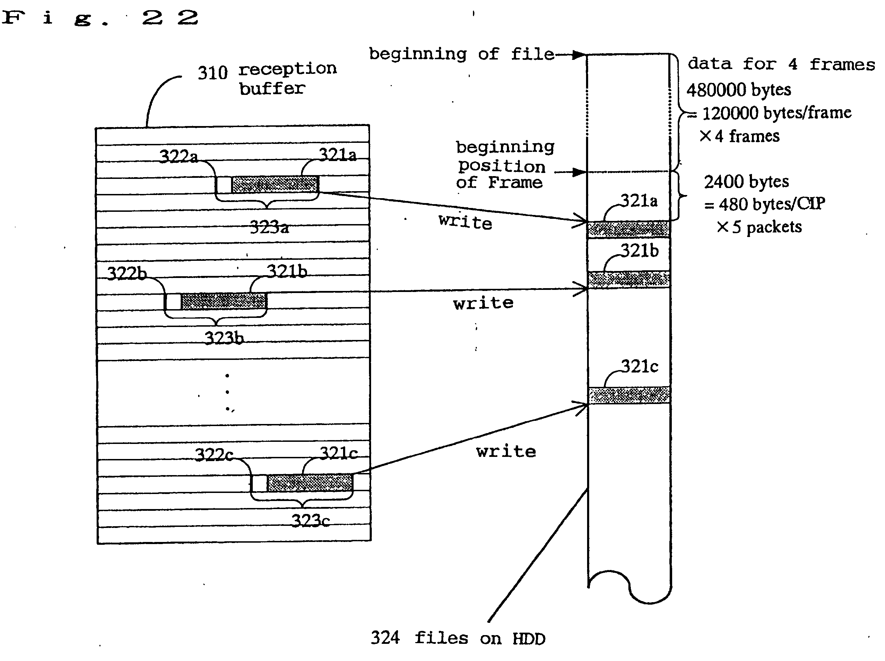

Hereinafter, an embodiment of the invention will be described with reference to Figs. 21 and 22.

Fig. 21 is a block diagram showing the whole configuration of a PC in a thirteenth embodiment of the invention, and 301 denotes a processor, 302 denotes a memory, 303 denotes a bus, 304 denotes an IEEE 1394 I/F, 305 denotes a SCSI I/F, 306 denotes a DV connected to the IEEE 1394 I/F (304), 307 denotes an HDD, 308 denotes a data input from the DV 306, 309 denotes a data which is obtained by extracting only a required portion from the data 308, 310 denotes a reception buffer ensured on the memory 302, and 311 denotes the PC.

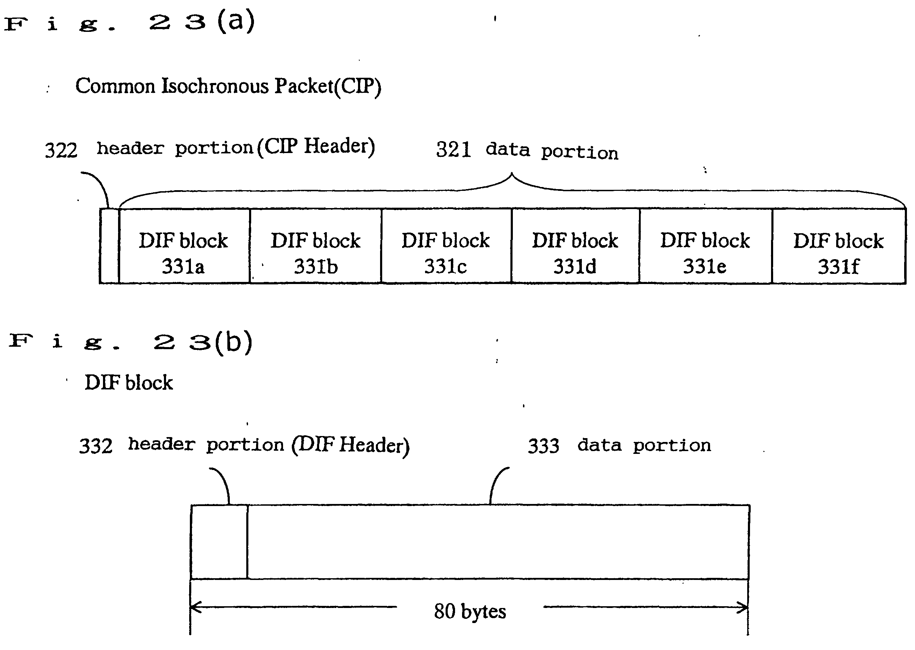

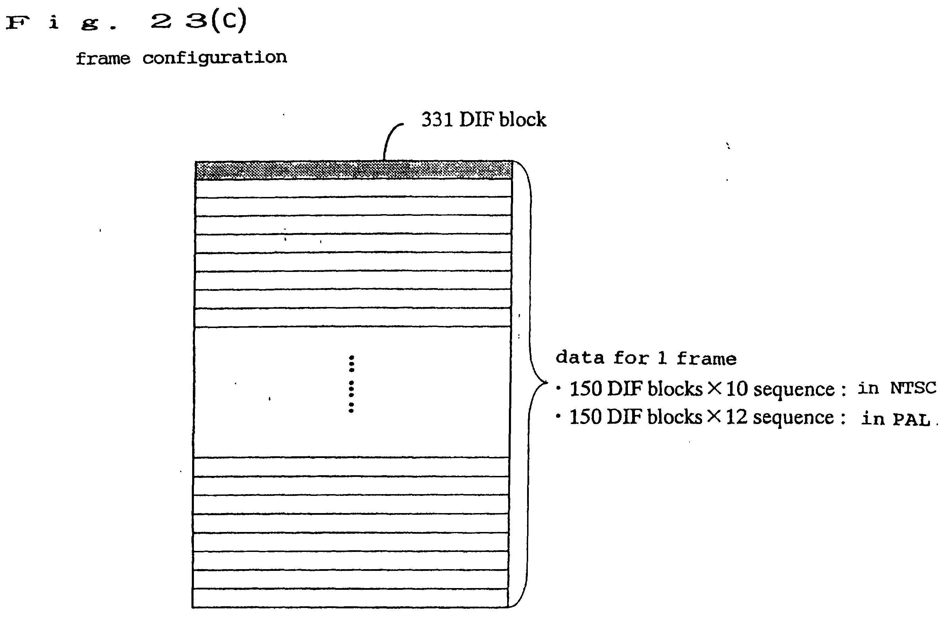

Fig. 22 is a view illustrating an example of an operation of extracting a data portion from data accumulated in the reception butter 310 and writing the data onto the HDD 307, and 324 conceptually shows files on the HDD 307. The configuration of the data 308 input from the DV 306 will be described. Fig. 23(a) shows the configuration of a packet (referred to as Common Isochronous Packet, and abbreviated as CIP) which actually transfers a data. In the case of a DV data of NTSC system or that of PAL system, one CIP is configured by six DIF blocks 331 and a header portion (referred to as CIP header).

Fig. 23(b) shows the configuration of each DIF block 331. In the case of a DV data of NTSC system or that of PAL system, it is defined that each block is configured by a DIF header of 3 bytes and a data portion of 77 bytes.

With reference to Fig. 23(c), the configuration of a data of one frame configured by 15000 DIF blocks 331 in the case of a DV data of NTSC system will be described. In the case of a DV data of PAL system, a data of one frame is configured by 1800 DIF blocks 331. In the term of a CIP, each Frame is configured by 250 or 300 blocks.

According to IEEE 1394, when a data is to be output, each device must send out one CIP for each of Time slots the number of which is 8000 per second. Time slots which can be used in one frame are 266.9333...(= 8000×1.001/30) in the case of NTSC system, and 320 (= 8000/25) in the case of PAL system. It is defined that the difference in number is adjusted by using a CIP (Null packet) which is configured by a CIP header only.

A data such as shown in Figs. 23(a) to 23(c) is input as Stream via the IEEE 1394 I/F 304. When a reception instruction from the processor 301 is received, reception of the data 308 is started, and the received data 308 is written into the reception buffer 310 disposed on the memory 302, via the bus 303. For example, the data written into the reception buffer 310 is configured as shown in Fig. 22.

The processor 301 transmits an instruction for writing a data portion 321 of the CIP 323 written into the reception buffer 310, into the files 324 on the HDD 307, to the SCSI I/F 305. At this time, on the basis of the value of DIF header of DIF block contained in the data portion 321, the processor 301 calculates the position of the data in one frame, and that in the file 324 where writing is to be performed. The calculated positions are simultaneously transmitted to the SCSI I/F 305. For example, under the state where data of four frames have been already written, a CIP 321a is a fifth CIP (the leading CIP is the zeroth) counted from the beginning of a frame on which writing is to be currently performed. In this case, the SCSI I/F 305 is informed that data writing is started from a position of 120,000 (bytes/frame) × 4 (frames) + 480 (bytes/CIP) × 5 (CIPs) = 482,400 bytes counted from the beginning of the file. Upon reception of the writing instruction from the processor 301, the SCSI I/F 305 reads out the data portion 321a via the bus 303, and performs writing with starting from the designated position of the file 324, i.e., the position of 482,400 bytes counted from the beginning.

Thereafter, on the all received CIPs, the process of writing respective data portions (for example, data portions 321b and 321c of CIP 323b and 323c) onto the HDD 307 with designating the writing position is repeatedly conducted.

The data stream which is written onto the HDD 307 as a result of the above-mentioned operation is rearranged in the unit of a correct frame in which unnecessary data such as Null packet are eliminated and, even when a data drop exists, a space of a suitable size is formed. The process which is performed on each data byte consists of one writing into the memory (reception buffer), one transfer between the memory (reception buffer) and the HDD, and one writing into the HDD. Namely, the number of operations is suppressed to a minimum value. It is possible to perform a process which is rapid at the maximum level.

The reception buffer 310 disposed on the memory 302 may be singular or plural.

The data which is transmitted in the form of a packet is a data output from a DV in accordance with NTSC system or PAL system. The invention is applicable also on a data output from a DV handling another system such as HiVision or EDTV, or a data of another type such as MPEG.

The IEEE 1394 I/F may be an interface which receives a packet consisting of a data portion and a header portion. The DV may be another apparatus which outputs a packet consisting of a data portion and a header portion.

The SCSI I/F may be another interface. The HDD may be another recording medium in which a position where a data is recorded can be freely designated.

### (Fourteenth Embodiment)

Hereinafter, an embodiment of a program-recorded medium of the invention will be described.

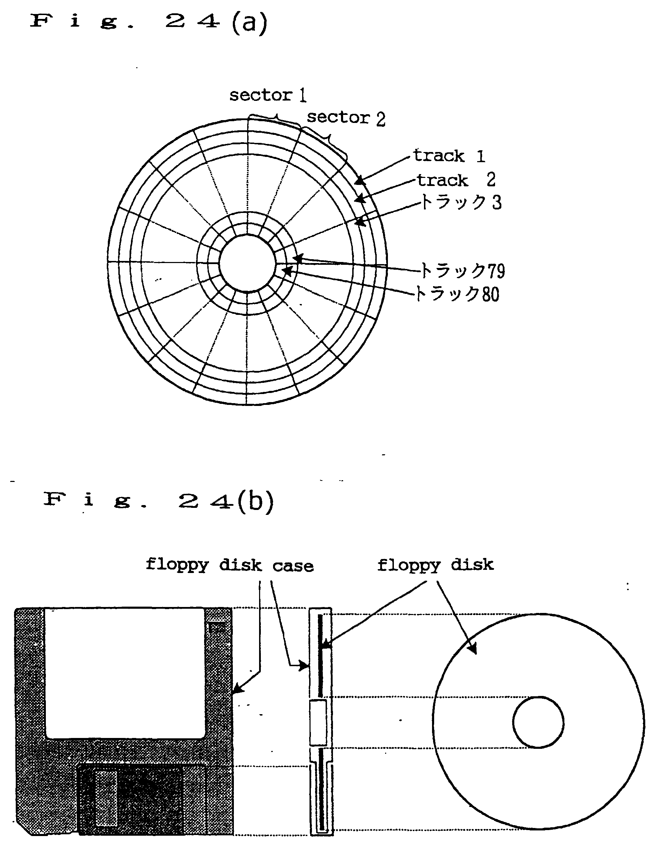

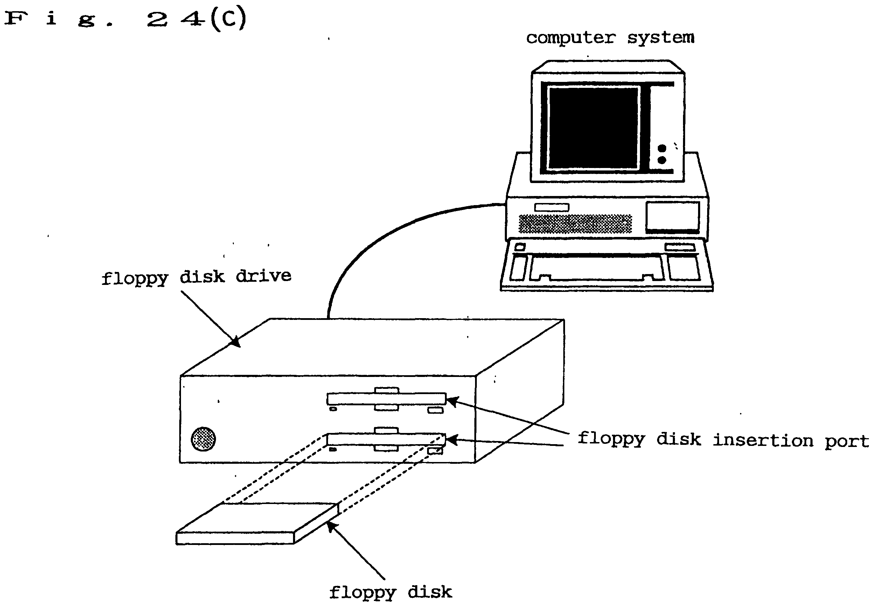

In order to realize a part or the whole of the process of the above-described embodiments by means of programs of a computer, a microcomputer, or the like, the programs may be recorded on a recording medium such as a floppy disk and then transported, thereby enabling the process to be easily executed in another independent system. Figs. 24(a) to 24(c) are views illustrating the case where the process is executed by using a floppy disk.

Fig. 24(a) is a view showing an example of a physical format of a floppy disk which is the main unit of a recording medium. Tracks are concentrically formed in the direction tram the outer periphery to the inner periphery, and the tracks are divided into 16 sectors in the angular direction. Programs are recorded in accordance with regions which are allocated in this way.

Fig. 24(b) is a view illustrating a case which houses the floppy disk. With starting from the left side, a front view of the floppy disk case, a section view of the case, and the floppy disk are shown. When the floppy disk is housed in the case in this way, the disk can be protected from an external impact, and safely transported.

Fig. 24(c) is a view illustrating execution of recording and reproduction of programs on a floppy disk. As illustrated, a floppy disk drive is connected to a computer system, so that programs can be recorded on and reproduced from a disk. A disk is mounted on and dismounted from the floppy disk drive via an insertion port. Programs for realizing the invention are stored by recording the programs from the computer system onto the disk by means of the floppy disk drive. In order to execute the invention, the floppy disk drive reads out the programs from the disk, and the programs are transferred to the computer system, thereby producing an environment for realizing the invention.

In the embodiment, description has been made with using a floppy disk as a recording medium. Also when an optical disk is used, the invention can be executed in the same manner. The recording medium is not restricted to this. The invention can be executed in the same manner as far as a medium which can record programs, such as an IC card, a ROM, or a cassette is used.

### Industrial Applicability

As described above, according to the invention, in the case of, for example, a large-capacity file, the file is divided so that the large-capacity file is handled on a recording medium as files of an appropriate capacity. Therefore, the time period for verifying immediately after recording whether recording is performed correctly or not can be made minimum, and data which are to be rerecorded as a result of the verification can be restricted to a part of the file instead of the whole of the file. As a result, data recording can be efficiently performed. In the case where an error occurs in one recording block on a tape during in reproduction, for example, the possibility that an error occurs also in another recording block is further lowered. With respect to recorded data also, therefore, the error correction ability is largely improved.

According to the invention, for example, recording media produce inconsistent recording medium identification information, and the information is registered in recording medium management information and recorded on the recording media. When recording medium identification information of a recording medium is once known, therefore, the recording medium can be surely identified, so that a fatal disorder such as that recording can be performed on a wrong recording medium is prevented from occurring. When recording medium identification information is recorded on the whole of a recording medium, for example, the recording medium identification information can be obtained only by reproducing a part of the recording medium. When medium reliability information is managed, the fear that recorded data cannot be reproduced can be further reduced, and the error correction ability can be largely improved.

According to the invention, when a file recorded on, for example, a tape is to be divided, actual data copy/movement on the tape never occurs, and hence division, trimming, coupling, and deletion of a file can be performed in a moment. When a file which is last recorded on a tape is deleted, for example, the deleted region is reused for newly recording a file. Therefore, it is possible to reduce increase of an unusable region due to deletion of a file.

According to the invention, when a large-capacity file is to be copied to an HDD, for example, copying is performed while automatically dividing the file, or the file is automatically divided and copying is then performed. As a result, copying between two recording media having different maximum handlable file sizes can be performed.

According to the invention, among data written into a reception buffer, for example, a required data can be directly written into a hard disk without transferring the data to another buffer and reshaping the data. Therefore, the writing process can be rapidly performed while shaping a data.

## Claims

1. A file recording method characterized in that
a file is divided into plural divided files,
said divided files are recorded on a recording medium,
information relating to said file, and information respectively relating to said divided files are produced, and
said information relating to said file, and said information relating to said divided files are recorded on said recording medium.

2. A file recording method according to claim 1, characterized in that said information relating to said file contains at least a division number of said file, and said information relating to said divided files contains at least information indicating a division sequence, and information relating to record positions of said divided files.

3. A file recording method according to claim 2, characterized in that, after said file is recorded as divided files an said recording medium, it is verified whether said divided files are recorded correctly or not, and, if it is judged that said divided files, are not recorded correctly, said divided files are rerecorded.

4. A file recording method according to claim 1, characterized in that division of said file, and production of said information relating to said file and said information relating to said divided files are managed by an OS (operating system).

5. A file recording method according to claim 1, characterized in that division of said file is performed when an amount of data of said file exceeds a predetermined reference.

6. A data recording apparatus characterized in that said apparatus comprises:
format converting means for, when an amount of data of a file exceeds a predetermined reference, dividing said file into plural divided files, producing information relating to said file and said divided files, and converting data of said divided files and said information into signals of a record format;
recording means for performing a predetermined record signal process on said signals of said record format which are obtained by said format converting means, and then recording said signals;
reproducing means for reproducing said recording medium, and performing a predetermined reproduction signal process and an error detection; and
reverse format converting means for obtaining said data of said divided files and said information from a signal of said record format which is obtained from said recording medium by said reproducing means, judging whether data of said divided files are recorded correctly or not, and informing said format converting means of a result of the judgment.

7. A data recording apparatus characterized in that said apparatus comprises recording means for recording at a time plural blocks to which same data is allocated, with using as a unit a synchronization block containing a synchronous pattern, an address, a data, and an error correction code.

8. A data recording apparatus according to claim 7, characterized in that said plural blocks which are recorded are two blocks, and, in said two blocks, data are arranged so as to be recorded by different heads.

9. A data recording apparatus according to claim 8, characterized in that said two blocks to which same data are allocated are arranged with respect to a width direction of a tape serving as a recording medium, and with being separated from each other by a distance which is equal to or longer than a half of width of a data record portion on said tape.

10. A recording medium managing method characterized in that, on the basis of recording apparatus identification information which can identify a recording apparatus that is used in initialization of a recording medium, and information of date and time when the initialization is started, recording medium identification information for identifying said recording medium is produced, and
said recording medium identification information is recorded on said recording medium as an item constituting recording medium management information which is information relating to a recording medium.

11. A recording medium managing method characterized in that recording medium identification information for identifying a recording medium is recorded in plural places of said recording medium.

12. A recording medium managing method according to claim 11, characterized in that, in the case where said recording medium is configured by a tape, said recording medium identification information is recorded in any region of each of tracks which are to be respectively formed by heads mounted on a rotary cylinder.

13. A recording medium managing method according to claim 12, characterized in that positions where said recording medium identification information is to be recorded are different from one another in said tracks.

14. A recording medium managing method according to claim 11, characterized in that, in the case where said recording medium is configured by a tape, said recording medium identification information is recorded for each minimum record unit of plural tracks which are to be respectively formed by heads mounted on a rotary cylinder.

15. A recording medium managing method characterized in that, when a recording medium which has been initialized is to be reinitialized, recording medium identification information which is produced before said reinitialization and which is used for identifying said recording medium is taken over.

16. A recording medium managing method according to claim 15, characterized in that, in the case where said recording medium is configured by a tape, when said recording medium which has been initialized is to be reinitialized, at least recording medium management information which is already recorded is deleted, and then new recording medium management information is recorded.

17. A recording medium managing method according to any one of claims 10 to 16, characterized in that, before recording is performed on said recording medium or said recording medium is reproduced, an operation of reading out recording medium identification information recorded on said recording medium, and checking whether said recording medium has been replaced with another one or not is performed.

18. A data recording apparatus characterized in that said apparatus comprises:
recording medium identification information producing means for, on the basis of recording apparatus identification information which identifies a recording apparatus that is used in initialization of a recording medium, and information of date and time when the initialization is started, producing recording medium identification information contained in recording medium management information which is information relating to said recording medium;
format converting means for converting file data, information relating to said file data, and said recording medium management information into signals of a record format in which said recording medium identification information is incorporated for each minimum record unit;
recording means for performing a predetermined record signal process on the signals of said record format which are obtained by said format converting means, and then recording said signals;
reproducing means for reproducing said recording medium on which said file data, said information relating to said file data, and said recording medium management information are recorded, and performing a predetermined reproduction signal process and an error detection;
reverse format converting means for reverse-converting said file, said information relating to said file, and said recording medium management information, from said signals of said record format which are obtained from said recording medium by said reproducing means, into an original format;
recording medium identification information extracting means for extracting said recording medium identification information incorporated for each minimum record unit, from the signals of said record format which are obtained from said recording medium by said reproducing means; and
recording medium management information holding means for holding recording medium management information relating to said recording medium, and judging whether said recording medium identification information obtained from said recording medium identification information extracting means coincides with said recording medium identification information contained said held recording medium management information or not.

19. A recording medium managing method characterized in that medium reliability information indicating reliability of a recording medium is recorded on said recording medium as an item constituting recording medium management information which is information relating to said recording medium.

20. A recording medium managing method according to claim 19, characterized in that, when it is judged that reliability of said recording medium is changed, said medium reliability information is updated.

21. A recording medium managing method according to claim 20, characterized in that, when a recording medium which has been initialized is to be reinitialized, latest medium reliability information is taken over and recorded.

22. A recording medium managing method according to claim 19, 20, or 21, characterized in that information indicating reliability of said recording medium is a number of operations of accessing said recording medium.

23. A data recording apparatus characterized in that said apparatus comprises:
format converting means for converting file data, information relating to said file data, and said recording medium management information relating to a recording medium into signals of a record format in which recording medium identification information for identifying said recording medium is incorporated for each minimum record unit;
recording means for performing a predetermined record signal process on the signals of said record format which are obtained by said format converting means, and then recording said signals;
reproducing means for reproducing said recording medium on which said file data, said information relating to said file data, and said recording medium management information are recorded, and performing a predetermined reproduction signal process and an error detection;
reverse format converting means for reverse-converting said file data, said information relating to said file data, and said recording medium management information, from said signals of said record format which are obtained from said recording medium by said reproducing means, into an original format; and
recording medium management information holding means for holding recording medium management information obtained by said reverse format converting means and relating to said recording medium, and, when said recording medium is accessed, updating medium reliability information which is an item constituting recording medium management information, to a latest state.

24. A file handling method characterized in that a region in which an original file is recorded and which is identifiable by a record start position and a record end position on a recording medium is divided into N subregions from a first subregion to an N-th subregion,
among positions across a boundary between an (i-1)-th subregion (1 < i ≦N) and an i-th subregion which are obtained by said division, a position on a side of said (i-1)-th subregion is determined as a record end position of said (i-1)-th subregion,
among said positions across said boundary, a position on a side of said i-th subregion is determined as a record start position of said i-th subregion, and
said N-divided subregions are handled as N new files.

25. A file handling method characterized in that a region in which an original file is recorded and which is identifiable by a record start position on a recording medium and a size of a file is divided into N subregions from a first subregion to an N-th subregion,
among positions across a boundary between an (i-1)-th subregion (1 < i ≦ N) and an i-th subregion which are obtained by said division, a position on a side of said i-th subregion is determined as a record end position of said i-th subregion,
a size of said i-th subregion which is obtained by said division is determined as a file size of said i-th subregion, and
said N-divided subregions are handled as N new files.

26. A file handling method characterized in that, in a region of an original file which is identifiable by a record start position and a record end position on a recording medium, a position immediately after an end of a record portion of a first data which is recorded with starting from said record start position is determined as a new record start position of said original file,
in the region of said original file, a position immediately before a start of a record portion of a second data which is recorded with ending at said record end position is determined as a new record end position of said original file, and
trimming of said original file is performed on the basis of said determined new record start and end positions.

27. A file handling method characterized in that, in a region of an original file which is identifiable by a record start position on a recording medium and a size of a file, a position immediately after an end of a record portion of a first data which is recorded with starting from said record start position is determined as a new record start position of said original file,
a data size required from said new record start position is determined as a file size, and
trimming of said original file is performed on the basis of said determined new record start position and said determined file size.

28. A file handling method characterized in that, in a case where N files which are identifiable by a record start position and a record end position on a recording medium are continuously recorded in ascending order as first to N-th (N ≧ 2) files,
said N files are handled as one new file which is identified by a record start position of said first file and a record end position of said N-th file.

29. A file handling method characterized in that, in a case where N files which are identifiable by a record start position on a recording medium and a size of a file are continuously recorded in ascending order as first to N-th (N ≧ 2) files,
a size of a data which is recorded from a record start position of said first file to a record end position of said N-th file is set as a size of a new file, and
said N files are handled as one new file which is identified by said record start position of said first file and said size of said new file.

30. A file handling method for a file system in which data recorded in continuous regions on a recording medium are managed and accessed as a file, a position immediately after a record end position of said file recorded close to an end is held as a data end position, and, when a new file is to be recorded on said recording medium, recording is performed with starting from said data end position, characterized in that,
when a latest file recorded on said recording medium and close to the end is to be deleted, said data end position is returned to a record start position of said latest file at the same time when said latest file is deleted, thereby deleting said latest file.

31. A file handling method according to claim 30, wherein said file system is a system in which, when accessing of a file recorded on a recording medium is to be disabled, a data of said file recorded on said recording medium is not erased, and set as a deleted file, thereby disabling accessing.

32. A file handling method according to claim 31, wherein said file system is a system in which, when accessing of a file recorded on a recording medium is to be disabled, it is possible to select one of (1) a data of said file recorded on said recording medium is not erased, and a region where said file is recorded is set as a deleted file which is entirely inaccessible, or (2) said region is set as a hidden file which cannot be accessed usually but which, when returned to said original file, is again set to be accessible.

33. A file handling method in the case where, by using a first recording medium in which a file management is performed by using a first file system of a handlable file size of M bytes, and a second recording medium in which a file management is performed by using a second file system of a handlable tile size of L bytes (M > L), a source file of a file size of K bytes (M ≧ K > L) and on said first recording medium is copied to said second recording medium, characterized in that,
on said first recording medium, said source file is divided into N subfiles each having a file size which is equal to or small than L bytes, and
said N divided subfiles are copied to said second recording medium.

34. A file handling method according to claim 33, characterized in that, in said first file system, when data recorded in continuous regions on said first recording medium are managed and accessed as a file, said file is expressed by a record start position on said first recording medium and a size of said file, and
said division of said source file is performed by (1) dividing a region of said first recording medium where said source file is recorded, into N subregions (N ≧ 2) from a first subregion to an N-th subregion, and (2) preparing an i-th new file in which a record start position is set to a record start position of said i-th subregion (1 ≦ i ≦N) and a file size is set to a data size recorded in said i-th subregion.

35. A file handling method according to claim 33, characterized in that, in said first file system, when data recorded in continuous regions on said first recording medium are managed and accessed as a file, said file is expressed by a record start position and a record end position on said first recording medium, and
said division of said source file is performed by (1) dividing a region of said first recording medium where said source file is recorded, into N subregions (N ≧ 2) from a first subregion to an N-th subregion, and (2) preparing an i-th new file in which a record start position is set to a record start position of said i-th subregion (1 ≦ i ≦ N) and a record end position is set to record end position of said i-th subregion.

36. A file handling method in the case where, by using a first recording medium in which a file management is performed by using a first file system of a handlable file size of M bytes, and a second recording medium in which a file management is performed by using a second file system of a handlable file size of L bytes (M > L), a source file of a file size of K bytes (M ≧ K > L) and on said first recording medium is copied to said second recording medium, characterized in that
N files having a total file size of K bytes are prepared on said second recording medium, and
said source file is divided into N portions and then copied to said N files.

37. A file handling method according to any one of claims 24 to 36, characterized in that said recording medium is a tape, and a record position of a data is expressed by a track number given to a track which is to be formed by a head mounted on a rotary cylinder.

38. A method of writing a received data onto a recording medium in a computer comprising: a first interface which receives a packet configured by a data portion and an addition information portion, through a transmission path; a recording medium in which a position where a data is to be recorded can be freely selected; a second interface which writes a data onto said recording medium; a memory which temporarily stores a data; a processor which controls operations of said first interface and said second interface; and a bus through which said first interface, said second interface, said memory, and said processor are connected to one another, characterized in that
said first interface sequentially writes said received packet into said memory through said bus,
in accordance with contents of said data portion of said packet written into said memory, said processor instructs said second interface about a record position of said recording medium where said data portion is to be recorded, and
said second interface reads out said data portion from said packet written into said memory, through said bus, and writes said data portion into said record position of said recording medium which is instructed by said processor.

39. A method of writing a received data onto a recording medium according to claim 38, characterized in that said data portion of said packet is formed by dividing a data which can be partitioned in a predetermined unit.

40. A program-recorded medium characterized in that a program for causing a computer to execute the whole or a part of steps of the file recording method according to any one of claims 1 to 5 is recorded.

41. A program-recorded medium characterized in that a program for causing a computer to execute the whole or a part of steps of the recording medium managing method according to any one of claims 10 to 17 and 19 to 22 is recorded.

42. A program-recorded medium characterized in that a program for causing a computer to execute the whole or a part of steps of the file handling method according to any one of claims 24 to 37 is recorded.

43. A program-recorded medium characterized in that a program for causing a computer to execute the whole or a part of steps of the method of writing a received data onto a recording medium according to claim 38 or 39 is recorded.
